# EUROPÄISCHE PATENTANMELDUNG

(11) **EP 4 679 339 A1**
(43) Veröffentlichungstag der Anmeldung: **14.01.2026**
(21) Anmeldenummer: 24188230.7
(22) Anmeldetag: 12.07.2024
(51) Int. Cl.: G06N 20/00, G06Q 50/04, G06T 7/00

(54) **VERFAHREN UND SYSTEME ZUR SELEKTION UND VERARBEITUNG VON EINGANGSDATENPUNKTEN ZUR VERARBEITUNG DURCH EIN MASCHINELL ERLERNTES PRÄDIKTIONSMODELL SOWIE COMPUTERPROGRAMMPRODUKT**

(71) Anmelder: Fraunhofer-Gesellschaft zur Förderung der angewandten Forschung e.V., 80686 München (DE)
(72) Erfinder: Wehinger, Lukas, 80797 München (DE); Gansloser, Jens, 80997 München (DE); Roscher, Karsten, 81475 München (DE)
(74) Vertreter: Ramrath, Lukas

(57) **Zusammenfassung**

Die Erfindung betrifft ein Verfahren und System zur Selektion von Eingangsdatenpunkten zur Verarbeitung durch ein maschinell erlerntes Prädiktionsmodell sowie ein Verfahren zur Verarbeitung von Eingangsdatenpunkten durch ein maschinell erlerntes Prädiktionsmodell, welches durch maschinelles Lernen in mehreren Trainingsschritten (TS) erzeugt wurde, umfassend die Schritte:
- Erfassen oder Empfangen eines Eingangsdatenpunkts (EDP),
- Bestimmen eines Verlaufs von mindestens zwei Prädiktionsqualitätswerten (PQW), wobei diese Prädiktionsqualitätswerte (PQW) jeweils mit einer trainingsschrittspezifischen Instanz eines Selektionsmodells bestimmt werden,
- Prüfen, ob der Verlauf der mindestens zwei Prädiktionsqualitätswerte (PQW) zu mindestens einem Referenzverlauf (R1, R2, ..., Rm) ähnlich ist,
- Selektion des Eingangsdatenpunkts (EDP) für die Verarbeitung, wenn der Verlauf der mindestens zwei Prädiktionsqualitätswerte (PQW) ähnlich zu dem mindestens einen Referenzverlauf (R1, R2, ..., Rm) ist.

## Beschreibung

Die Erfindung betrifft ein Verfahren und System zur Selektion von Eingangsdatenpunkten zur Verarbeitung durch ein maschinell erlerntes Prädiktionsmodell sowie ein Verfahren zur Verarbeitung von Eingangsdatenpunkten durch ein maschinell erlerntes Prädiktionsmodell.

In zahlreichen Anwendungen erfolgt eine Verarbeitung von Eingangsdatenpunkten durch ein maschinell erlerntes Modell. Eine exemplarische Anwendung ist eine Qualitätsprüfung eines Bauteils, wobei auf Basis eines Abbilds des Bauteils und durch Nutzung eines maschinell erlernten Modells eine Aussage getroffen wird, ob das Bauteil vorbestimmten Qualitätsanforderungen genügt. Eine weitere Anwendung ist das Bestimmen einer insbesondere medizinischen Diagnose, wobei auf Basis eines Abbilds und durch Nutzung eines maschinell erlernten Modells eine Diagnose erstellt wird. Eine weitere Anwendung ist eine Sortierung einer Postsendung zur Weiterverarbeitung bzw. zum Weitertransport, wobei auf Basis eines Abbilds der Postsendung, insbesondere eines Adressfelds, und durch Nutzung eines maschinell erlernten Modells eine Sortier-Aussage bezüglich der weiteren Verarbeitung/des weiteren Transports getroffen wird.

Systeme zur Verarbeitung von Eingangsdatenpunkten können auch als Automatisierungssysteme bezeichnet werden, wobei diese Systeme die jeweils maschinell erlernten Modelle für die Automatisierungsaufgabe nutzen. Bei der Nutzung von maschinell erlernten Modellen (MLM) bestehen jedoch häufig folgende praktische Probleme:
1. Eine zu geringe Menge der verfügbaren Daten für das Trainieren maschinell erlernten Modells.
2. Ein langwieriger iterativer Entwicklungsprozess, bevor das System effektiv genutzt werden kann
3. Keine ausreichende Zuverlässigkeit der KI-Systeme

Bezüglich der Datenverfügbarkeit kann insbesondere problematisch sein, dass Systeme zur Bildverarbeitung, etwa zur visuellen Inspektion, meist komplexe MLM erfordern. Der Bedarf an großen Datenmengen, um solche MLM für eine zuverlässige Funktion zu trainieren, ist ein verbreitetes Hindernis für deren Anwendung. Häufig ist es nicht möglich große Mengen an Daten zu erfassen, etwa bei geringen Stückzahlen oder komplexen Messverfahren. Sogar wenn ausreichend Daten erfasst werden können stellt das korrekte, konsistente und präzise Annotieren der Daten, was auch als Labelling bezeichnet wird, einen großen Zeit- und Kostenaufwand dar. Durch geringe Datenqualität (z.B. fehlende Variabilität) kann auch bei großen Datenmengen nicht garantiert werden, dass diese zu einem zuverlässigen MLM führen.

Auch während dem Einsatz des Systems stellt das Labelling noch ein großes Hindernis dar: Sollte sich die Umgebung (z.B. die Lichtverhältnisse) oder die abgebildeten Objekte verändern, muss das MLM in der Regel überarbeitet werden. Um diese Veränderungen mit dem MLM zu berücksichtigen, müssen zusätzliche Daten, welche die geänderten Umstände repräsentieren, erfasst werden. Eine gute Auswahlstrategie solcher Datenpunkte kann den Aufwand (z.B.: Kosten für die Annotation) für die Anpassungen maßgeblich verringern.

Weiter problematisch ist, dass das gelernte (trainierte) MLM oft von Hand angepasst werden muss nachdem Daten für das Training erfasst wurden. Gegebenenfalls ist es erforderlich, dass Spezialfälle gesondert betrachtet werden müssen. In der Regel werden mehrere Iterationen eines Trainings und einer praktischen Evaluierung benötigt, um ein MLM für eine zuverlässig funktionierende Automatisierungslösung bereitzustellen. Dieser hohe Aufwand vor der Einsetzbarkeit des MLM stellt einen große Einstiegshürde und ein Risiko für den Einsatz solcher Verfahren dar.

Für Automatisierungsaufgaben, insbesondere im Kontext der Inspektion und Qualitätssicherung, werden hohe Anforderungen an die Korrektheit und Zuverlässigkeit der Lösungen gestellt. Die Zuverlässigkeit kann z.B. durch Fehlervermeidung, Quantifizierung von Unsicherheiten oder Erkennung von bisher unbekannten Daten (= Out-of-Distribution Data) gewährleistet werden.

Gerade komplexe Deep-Learning-Modelle (DL-Modelle) sind häufig nicht in der Lage, korrekt auf Unsicherheiten zu reagieren, z.B. unbekannte Situationen/Objekte hervorzuheben oder zu identifizieren, wann eine Entscheidung auf Basis der vorliegenden Daten nicht in zuverlässiger Weise mit dem Modell getroffen werden kann.

Insbesondere für Anwendungen, die eine automatisierte visuelle Inspektion betreffen, wird die Einsetzbarkeit häufig durch Einschränkungen des Automatisierungssystems oder des Einsatzgebietes realisiert. Dies kann z.B. bedeuten, dass die Komplexität des Problems reduziert wird, sodass einfachere Lösungen (etwa klassische Computer-Vision -Verfahren) verwendet werden können. Somit können häufig nur Automatisierungsprobleme mit einer vergleichsweise niedrigen Komplexität gelöst werden. Auch kann es erforderlich sein, die Inspektionsumgebung konstant zu halten. Beispiele hierfür sind die Gewährleistung gleichbleibender Lichtverhältnisse, die Verwendung baugleicher Sensoren, die Gewährleistung gleichbleibender Ausrichtung eines Sensors zu einem abzubildenden Bauteil, die Verwendung nur sehr ähnlicher Bauteile, etc. Das Inspizieren verschiedener Objekte ist in solchen Systemen kaum möglich.

Aus dem Stand der Technik bekannt sind Verfahren zur Anomalieerkennung oder Verfahren zur so genannten Out-of-Distribution-Detektion, um Eingangsdatenpunkte zu selektieren, die für eine zuverlässige Verarbeitung durch ein MLM geeignet sind. Ebenfalls bekannt sind Verfahren, die eine Unsicherheit einer Prädiktion, also eines vom MLM erzeugen Ausgangsdatenpunkts, bestimmen. Weiter bekannt sind Verfahren zum aktiven Lernen, um MLM möglichst effektiv zu aktualisieren.

Die CN 117557534 A betrifft die zerstörungsfreie Prüfung von Röntgenschweißnahtfehlern und ist insbesondere ein intelligentes Bewertungsverfahren für die Größe von Röntgenschweißnahtfehlern auf der Grundlage einer adaptiven Optimierung von Modellhyperparametern.

Die KR20240012790 A offenbart eine Turbinenschaufel-Inspektionsvorrichtung, die in der Lage ist, feinere Defekte zu finden und Ergebnisse durch Automatisierung der Inspektion zu korrigieren. Die Inspektionsvorrichtung umfasst einen Sensor, der so konfiguriert ist, dass er das Aussehen einer Turbinenschaufel erfasst, um Messdaten zu erzeugen, eine Erfassungseinheit, die konfiguriert ist, um die Messdaten von dem Sensor zu erfassen, einen Speicher zum Speichern der Messdaten als eine Datenbank, eine Lerneinheit, die konfiguriert ist, ein Klassifikationsmodell durch maschinelles Lernen auf der Grundlage der Messdaten zu erzeugen und eine Klassifizierungseinheit, die so konfiguriert ist, dass sie die Qualität der Turbinenschaufel unter Verwendung des Klassifizierungsmodells klassifiziert, um einen Ergebnisbericht zu erzeugen.

Es stellt sich das technische Problem, ein Verfahren und System zur Selektion von Eingangsdatenpunkten zur Verarbeitung durch ein maschinell erlerntes Prädiktionsmodell sowie ein Verfahren und System zur Verarbeitung von Eingangsdatenpunkten durch ein maschinell erlerntes Prädiktionsmodell sowie ein Computerprogrammprodukt zu schaffen, die in einfach implementierbarer und zuverlässiger Weise solche Eingangsdatenpunkte selektieren für die eine Verarbeitung durch das maschinell erlerntes Prädiktionsmodell mit einer hohen Verarbeitungsqualität möglich ist und somit eine hohe Verarbeitungsqualität gewährleisten, wobei insbesondere die vorhergehend erläuterten Nachteile vermieden werden.

Die Lösung des technischen Problems ergibt sich durch die Gegenstände mit den Merkmalen der unabhängigen Ansprüche. Vorteilhafte Ausgestaltungen der Erfindung ergeben sich aus den Unteransprüchen.

Vorgeschlagen wird ein Verfahren zur Selektion von Eingangsdatenpunkten zur Verarbeitung durch ein maschinell erlerntes Prädiktionsmodell. Dieses kann durch maschinelles Lernen in mehreren Trainingsschritten erzeugt werden. Das Verfahren kann ein Trainieren des Prädiktionsmodells umfassen.

Ein Eingangsdatenpunkt bezeichnet einen Datenpunkt oder Datensatz, der durch das Prädiktionsmodell zur Erzeugung eines Ausgangsdatenpunkts verarbeitet wird. Ein Eingangsdaten- und ein Ausgangsdatenpunkt kann insbesondere ein einzelner Wert, ein Vektor mit mehreren Elementen oder eine zwei-, drei- oder höherdimensionale Matrix sein. Selbstverständlich sind auch andere Formate von Datenpunkten vorstellbar, z.B. eine Textform. Ein- und Ausgangsdatenpunkte können in Form eines Signals oder in Form eines vorbestimmten Datenformats repräsentiert sein. Vorzugsweise kann ein Eingangsdatenpunkt ein zwei- oder dreidimensionales Abbild sein, welches von einer entsprechenden Bilderfassungseinrichtung erzeugt wurde.

Ein maschinell erlerntes Modell (MLM) kann ein durch ein Verfahren zum überwachten Lernen erzeugtes Modell sein. Solche MLM werden nachfolgend auch als überwachte MLM bezeichnet. Somit kann es insbesondere ein neurales Netz sein, insbesondere ein DL-Modell wie ein CNN (convolutional neural network), ein RNN (recurrent neural network), ein LSTM-Netzwerk (long short-term memory network) oder ein Modell der Transformer Familie (Transformer-Modell).

Es ist aber auch vorstellbar, dass ein MLM durch ein Verfahren zum unüberwachten Lernen, zum semi-überwachten Lernen oder zum selbstüberwachten Lernen erzeugt wurde. Solche MLM werden nachfolgend auch als unüberwachte MLM bezeichnet. Insbesondere kann das MLM ein GAN (generative adversial network) oder ein VAE (variational autoencoder) sein.

Ein MLM, insbesondere das nachfolgend noch näher erläuterte Selektionsmodell (SM), aber auch das erwähnte Prädiktionsmodell (PM), ist ein in mindestens zwei, vorzugsweise in mehr als zwei, Trainingsschritten erzeugtes Modell. Für das Trainieren eines überwachten MLM in einer so genannten Trainingsphase kann ein Trainingsdatensatz verwendet werden, der Trainings-Eingangsdatenpunkte und Trainings-Ausgangsdatenpunkte umfasst. Ein solcher Trainingsdatensatz kann erzeugt werden, indem ein Experte für einen Trainings-Eingangsdatenpunkt einen Trainings-Ausgangsdatenpunkt erzeugt bzw. vorgibt, insbesondere für ein Verfahren zum überwachten Lernen. Dies kann auch als Annotation bezeichnet werden. Für das Trainieren eines unüberwachten MLM kann ein Trainingsdatensatz mit Trainings-Eingangsdatenpunkten aber ohne Trainings-Ausgangsdatenpunkte verwendet werden.

Trainingsdaten werden hierbei anwendungsabhängig ausgewählt. Bei einer bildbasierten Qualitätsprüfung können Trainings-Eingangsdaten Abbilder von zu prüfenden Objekten sein, während Trainings-Ausgangsdaten eine Qualität des abgebildeten Objekts repräsentieren oder repräsentieren, ob das abgebildete Objekt vorbestimmte Qualitätsanforderungen erfüllt.

In der Trainingsphase können Parameter, insbesondere Gewichte und/oder Verknüpfungen, des MLM derart angepasst werden, dass bei einem überwachten MLM eine Abweichung zwischen den vom MLM für die Trainings-Eingangsdatenpunkte erzeugten Ausgangsdatenpunkten möglichst wenig von den Trainings-Ausgangsdatenpunkten abweichen und bei einem unüberwachten MLM ein Wert einer Verlustfunktion, die einen so genannten Rekonstruktionsfehler und/oder einen so genannten Regulierungsterm umfassen kann, minimiert wird. Hierzu kann in jedem Trainingsschritt mindestens ein Parameter des MLM verändert werden. Nach der Durchführung eines Trainingsschritts liegt eine trainingsschrittspezifische Instanz des MLM vor. Verschiedene trainingsschrittspezifische Instanzen können sich somit in mindestens einem Parameter des MLM unterscheiden. Nach dem letzten Trainingsschritt kann das erlernte MLM vorliegen, welches eine für den letzten Trainingsschritt spezifische Instanz sein kann. Das vorgeschlagene Verfahren kann das Training mit den mindestens zwei Trainingsschritten umfassen. Das Training kann vor der ersten Durchführung des Verfahrens erfolgen.

Das erlernte Modell bzw. eine datenbasierte Repräsentation davon kann in abrufbarer Weise gespeichert werden, insbesondere in einer Speichereinrichtung. Ebenfalls können mehrere ausgewählte oder aber alle trainingsschrittspezifischen Instanzen bzw. Repräsentation davon in abrufbarer Weise gespeichert werden. Z.B. kann nur jede n-te Instanz mit n > 2 gespeichert werden. Auch können nur solche Instanzen gespeichert werden für die die im vorangegangenen Trainingsschritt durchgeführte Änderung von mindestens einem Parameter größer als ein vorbestimmtes Maß war. Alternativ oder kumulativ können nur solche Instanzen gespeichert werden für die die aus dem vorangegangenen Trainingsschritt resultierende Änderung (Reduktion) der Abweichung größer als ein vorbestimmtes Maß war. Durch die Speicherung von ausgewählten, aber nicht allen trainingsschrittspezifischen Instanzen ergibt sich in vorteilhafter Weise eine Verringerung des Speicherbedarfs für das vorgeschlagene Verfahren während die Speicherung aller Instanzen in vorteilhafter Weise eine Zuverlässigkeit der Selektion erhöht.

Das Verfahren umfasst einen Erfassungsschritt oder einen Empfangsschritt, indem der Eingangsdatenpunkt erfasst oder empfangen wird. Ein Erfassen kann durch eine Erfassungseinrichtung erfolgen, insbesondere einen Sensor. Es ist auch vorstellbar, dass der Eingangsdatenpunkt in Abhängigkeit einer Erfassung bestimmt wird, beispielsweise durch eine Signal- oder Datenverarbeitung eines erfassten Eingangsdatenpunkts. Ein Empfangen kann durch eine Empfangseinrichtung erfolgen, die insbesondere für eine Datenübertragung ausgebildet sein kann.

In einem Bestimmungsschritt wird ein Verlauf von mindestens zwei Prädiktionsqualitätswerten bestimmt, wobei diese Prädiktionsqualitätswerte jeweils mit einer trainingsschrittspezifischen Instanz eines Selektionsmodells bestimmt werden, also mit voneinander verschiedenen Instanzen. Vorzugsweise wird ein Verlauf für deutlich mehr, insbesondere mehr als 10, 50 oder 100, Instanzen bestimmt. Der Prädiktionsqualitätswert repräsentiert hierbei eine Qualität der Verarbeitung durch die jeweils trainingsschrittspezifische Instanz des SM. Er kann bei der Verarbeitung eines Eingangsdatenpunkts erzeugt werden, insbesondere durch die entsprechende Instanz des Selektionsmodells, und einem Ausgangsdatenpunkt, der durch Verarbeitung eines Eingangsdatenpunkts durch das SM erzeugt wird, zugeordnet oder ein Teil dieses Ausgangsdatenpunkts sein. Der Prädiktionsqualitätswert kann ein Maß für Konfidenz sein bzw. diese repräsentieren, z.B. ein Konfidenzwert. Der Konfidenzwert kann ein quantitatives Maß oder eine quantitative Metrik sein, welches eine Sicherheit oder Unsicherheit des MLM in Bezug auf seine Vorhersagen oder internen Repräsentationen quantifiziert. Bei überwachten MLM kann ein Konfidenzwert ein Konfidenzintervall für einen Ausgangsdatenpunkt repräsentieren, wobei diese Konfidenzintervall angibt, wie sicher oder unsicher das MLM bezüglich dieses Ausgangsdatenpunkts bzw. seiner Korrektheit ist. Bei einem unüberwachten MLM kann ein Konfidenzwert die Unsicherheit oder die Varianz der latenten Repräsentationen oder Cluster-Zuweisungen eines Eingangsdatenpunkts beschreiben. Diese kann repräsentieren wie sicher das MLM ist, dass ein Eingangsdatenpunkt zu einem bestimmten Cluster gehört. Auch kann der Prädiktionsqualitätswert eine Wahrscheinlichkeit repräsentieren mit der für den entsprechenden Eingangsdatenpunkt ein richtiger Ausgangsdatenpunkt, also ein richtiges oder akzeptables Ergebnis, erzeugt wurde.

Mit anderen Worten wird für alle oder aber nur für ausgewählte und nicht alle trainingsschrittspezifischen Instanzen des SM ein Prädiktionsqualitätswert bestimmt. Durch die Bestimmung von Prädiktionsqualitätswerten für ausgewählte, aber nicht alle trainingsschrittspezifischen Instanzen ergibt sich in vorteilhafter Weise eine Verringerung des Rechenaufwands für das vorgeschlagene Verfahren während die Bestimmung für alle Instanzen in vorteilhafter Weise eine Zuverlässigkeit der Selektion erhöht.

Das Selektionsmodell kann gleich dem Prädiktionsmodell sein. In diesem Fall kann also das entsprechende MLM sowohl zur Selektion eines Eingangsdatenpunkts als auch zur Verarbeitung eines selektierten Eingangsdatenpunkts genutzt werden.

Allerdings kann das Selektionsmodell auch ein von dem Prädiktionsmodell verschiedenes Modell sein. So ist es z.B. möglich, dass das Prädiktionsmodell ein überwachtes MLM ist. Das Selektionsmodell kann ein überwachtes oder unüberwachtes MLM sein.

Im Folgenden kann das Selektionsmodell auch als Basismodell bezeichnet werden. Das Basismodell bezeichnet ein MLM, welches mit einer ersten Menge von Trainingsdaten trainiert wurde. Das vorgeschlagene Verfahren kann das vorhergehend beschriebene Trainieren des Selektionsmodells und/oder des Prädiktionsmodells umfassen.

In einem Prüfschritt wird geprüft, ob der Verlauf der mindestens zwei Prädiktionsqualitätswerte zu mindestens einem Referenzverlauf ähnlich ist. Dieser Referenzverlauf kann ein Verlauf sein, der nach dem Training als zuverlässiger Verlauf von Prädiktionsqualitätswerten klassifiziert wurde. Somit kann auch während der Trainingsphase für alle oder ausgewählte, aber nicht alle, Eingangsdatenpunkte der Verlauf der Prädiktionsqualitätswerte bestimmt werden, insbesondere - wie vorhergehend erläutert - für alle oder ausgewählte, aber nicht alle, Trainingsschritte. Auch diese Verläufe können in abrufbarer Weise gespeichert werden. Diese Verläufe können auch als Training Dynamics bezeichnet werden und spiegeln das Verhalten der Prädiktionsqualitätswerte für einen Trainings-Eingangsdatenpunkt über das Training wieder. Wie nachfolgend noch näher erläutert, kann der mindestens eine Referenzverlauf in Abhängigkeit dieser Verläufe bestimmt werden, beispielsweise als Verlauf der Prädiktionsqualitätswerte für einen (Trainings)-Eingangsdatenpunkt oder in Abhängigkeit von ähnlichen Verläufen für eine Mehrzahl von (Trainings-)Eingangsdatenpunkten. Ein Verlauf kann als zuverlässiger Verlauf klassifiziert werden, wenn er ein vorbestimmtes Zuverlässigkeitskriterium erfüllt. Ein zuverlässiger Verlauf kann ein Verlauf bezeichnen, der sich ergibt, wenn eine Prädiktionsqualität sich während der Trainingsphase schnell und/oder zuverlässig einstellt. Beispielhafte Zuverlässigkeitskriterien werden nachfolgend noch näher erläutert.

Auch kann für eine Gesamtmenge von Eingangsdatenpunkten eine Teilmenge von geeigneten Eingangsdatenpunkten bestimmt werden, wobei Eingangsdatenpunkte dieser Teilmenge zur Verarbeitung geeignet sind. Diese Bestimmung kann z.B. durch einen Nutzer erfolgen. So kann z.B. ein Nutzer die Eingangsdatenpunkte der Teilmenge aus der Gesamtmenge auswählen. Auch kann die Bestimmung in Abhängigkeit eines Prädiktionsqualitätswerts eines Ausgangsdatenpunkts der bei einer Verarbeitung des Eingangsdatenpunkts mit dem Prädiktionsmodell oder einem weiteren Prädiktionsmodell erzeugt wurde, erfolgen. Auch kann die Bestimmung in Abhängigkeit eines Verlaufs von Prädiktionsqualitätswerten, die mit einer trainingsschrittspezifischen Instanz des (weiteren) Prädiktionsmodells erzeugt wurden, erfolgen. So können die Eingangsdatenpunkte der Gesamtmenge als geeignete Eingangsdatenpunkte bestimmt werden für die
- ein eingangsdatenpunktspezifische Prädiktionsqualitätswert, der mit dem (weiteren) Prädiktionsmodell bestimmt wird, zumindest eine vorbestimmte Eigenschaft erfüllt, z.B. größer als ein vorbestimmtes Maß ist und/oder
- ein eingangsdatenpunktspezifischer Verlauf von Prädiktionsqualitätswerten, die mit trainingsschrittspezifischen Instanzen des Prädiktionsmodells bestimmt wurden, zumindest eine vorbestimmte Eigenschaft erfüllt.

Mit diesen geeigneten Eingangsdatenpunkten kann das Selektionsmodell trainiert werden, wobei ein Referenzverlauf in Abhängigkeit der eingangsdatenpunktspezifischen Verläufe von Prädiktionsqualitätswerten, insbesondere in Abhängigkeit einer Menge ähnlicher Verläufe, bestimmt wird, wobei diese Prädiktionsqualitätswerte jeweils mit einer trainingsschrittspezifischen Instanz des Selektionsmodells bestimmt werden.

Die Ähnlichkeit kann in Abhängigkeit eines Ähnlichkeitsmaßes bestimmt werden oder durch ein Ähnlichkeitsmaß repräsentiert werden. Dieses Ähnlichkeitsmaß kann insbesondere ein Maß für die Abweichung der Verläufe voneinander sein. Beispielhafte Ähnlichkeitsmaße werden nachfolgend noch näher erläutert. Insbesondere kann der Verlauf der mindestens zwei Prädiktionsqualitätswerte als ähnlich zu dem mindestens einem Referenzverlauf klassifiziert werden, wenn ein vorbestimmtes Ähnlichkeitskriterium erfüllt ist. Das vorbestimmte Ähnlichkeitskriterium kann erfüllt sein, wenn eine Abweichung zwischen den Verläufen kleiner als ein vorbestimmter Schwellwert ist.

Ist der Verlauf der mindestens zwei Prädiktionsqualitätswerte ähnlich zu mehr als einem Referenzverlauf, so kann der ähnlichste Referenzverlauf als Referenzverlauf bestimmt werden, dem der Verlauf der mindestens zwei Prädiktionsqualitätswerte zugeordnet wird.

In einem Selektionsschritt wird der Eingangsdatenpunkt für die Verarbeitung selektiert, wenn der Verlauf der mindestens zwei Prädiktionsqualitätswerte ähnlich zu dem mindestens einen Referenzverlauf ist. Somit kann also die Selektion eine Klassifizierung eines Eingangsdatenpunkts als zur Verarbeitung geeignet bezeichnen. Ist der Verlauf der mindestens zwei Prädiktionsqualitätswerte nicht ähnlich zu dem mindestens einen Referenzverlauf, insbesondere zu allen Referenzverläufen, so wird der Eingangsdatenpunkt nicht für die Verarbeitung selektiert. In diesem Fall kann der Eingangsdatenpunkt als nicht zur Verarbeitung geeignet klassifiziert werden.

Ist der Verlauf der mindestens zwei Prädiktionsqualitätswerte ähnlich zu dem mindestens einen Referenzverlauf, so kann davon ausgegangen werden, dass auch für den Eingangsdatenpunkt in zuverlässiger Weise ein richtiger Ausgangsdatenpunkt bestimmt wird. Somit kann ein solcher Ausgangsdatenpunkt als für eine nachfolgende Verarbeitung qualifiziert erachtet werden, z.B. um zur Steuerung eines externen Systems verwendet zu werden.

Durch das vorgeschlagene Verfahren ergibt sich in vorteilhafter Weise, dass in einfach implementierbarer und zuverlässiger Weise ein Eingangsdatenpunkt für eine Verarbeitung durch ein maschinell erlerntes Prädiktionsmodell mit einer hohen Verarbeitungsqualität selektiert werden und somit eine hohe Qualität bei der Verarbeitung des Eingangsdatenpunktes durch das MLM gewährleistet werden kann. Eine hohe Verarbeitungsqualität kann insbesondere dann gegeben sein, wenn von einer guten Prädiktionsqualität für einen erzeugten Ausgangsdatenpunkt ausgegangen werden kann, z.B. eine Qualität, die höher als ein vorbestimmter Schwellwert ist. Das vorgeschlagene Verfahren ermöglicht auch eine Automatisierung der Verarbeitung von Eingangsdatenpunkten. So können durch das maschinell erlernte Prädiktionsmodell automatisiert nur die Eingangsdatenpunkte verarbeitet werden, die wie vorhergehend erläutert selektiert wurden. In vorteilhafter Weise kann so eine Entscheidung über eine automatisierte Verarbeitung auch bei unzureichender Datenmenge und/oder - qualität getroffen werden, da für einen selektierten Eingangsdatenpunkt aufgrund des Verfahrens davon ausgegangen werden kann, dass dieser zu einer Teilmenge von Daten gehört, für die eine ausreichende Datenmenge und -qualität vorliegt. So kann davon ausgegangen werden, dass es im Betrieb bzw. bei einer Anwendung eines MLM Eingangsdatenpunkte gibt, die keine zuverlässige Prädiktion, also Bestimmung, eines Ausgangsdatenpunkts erlauben, z.B. wenn solche Eingangsdatenpunkte fehlerhafte Abbilder oder unbekannte Objekte repräsentieren. Dies kann insbesondere dann der Fall sein, wenn Trainingsdaten zum Trainieren des MLM solche Eingangsdatenpunkte nicht adäquat abdecken. Mit dem vorgeschlagenen Verfahren können dann automatisch Eingangsdatenpunkte für die (automatisiert) Weiterverarbeitung ausgewählt werden, für von den Trainingsdaten in ausreichender Weise abgedeckt sind. Nicht ausgewählte Eingangsdatenpunkte können an Experten zur (manuellen) Weiterverarbeitung weitergeleitet werden.

In einer weiteren Ausführungsform wird für mindestens zwei Trainings-Eingangsdatenpunkte während eines Trainings des Selektionsmodells ein eingangsdatenpunktspezifischer Verlauf von mindestens zwei Prädiktionsqualitätswerten bestimmt, wobei diese Prädiktionsqualitätswerte jeweils mit einer trainingsschrittspezifischen Instanz des Selektionsmodells bestimmt werden. Diese wurde vorhergehend bereits erläutert. Weiter werden die eingangsdatenpunktspezifischen Verläufe einer Menge ähnlicher Verläufe zugeordnet, wenn sie ein vorbestimmtes Ähnlichkeitskriterium erfüllen. Mit anderen Worten kann ein so genanntes Clustering der Verläufe von Prädiktionsqualitätswerten durchgeführt werden, also ein Verfahren zur Detektion von ähnlichen Verläufen und Zuordnung dieser ähnlichen Verläufe zu einer Menge. Hierbei kann eine Anzahl von Mengen, denen ein eingangsdatenpunktspezifischer Verlauf zugeordnet werden kann, begrenzt sein, z.B. auf einen vorbestimmten Maximalwert.

Dann kann ein Referenzverlauf in Abhängigkeit der eingangsdatenpunktspezifischen Verläufe bestimmt werden, die einer Menge zugeordnet sind. Z.B. kann für jede Menge ein mengenspezifischer Durchschnittsverlauf bestimmt werden. Dieser kann z.B. bestimmt werden, indem aus den trainingsschrittspezifischen Prädiktionsqualitätswerten aller Verläufe, die dieser Menge zugeordnet sind, ein Durchschnittswert bestimmt wird, wobei der Durchschnittsverlauf diese Durchschnittswerte umfasst. Ein Durchschnittswert kann z.B. ein Mittelwert oder gewichteter Mittelwert sein. Auch eine andere Form der Bestimmung der Durchschnittswerte bzw. des Durchschnittsverlaufs ist vorstellbar.

Das erläuterte Clustering von Verläufen ermöglicht in vorteilhafter Weise eine vereinfachte Bestimmung eines Referenzverlaufs und somit eine einfach implementierbare Durchführung des Verfahrens, insbesondere mit reduziertem Speicheraufwand, da nicht alle eingangsdatenpunktspezifischen Verläufe als mögliche Referenzverläufe abgespeichert werden müssen.

In einer weiteren Ausführungsform ist das vorbestimmte Ähnlichkeitskriterium erfüllt, wenn eine Abweichung zwischen den Verläufen kleiner als ein vorbestimmter Schwellwert ist. Die Abweichung kann als euklidische Distanz oder als Kosinus-Distanz bestimmt werden, insbesondere zwischen korrespondierenden Prädiktionsqualitätswerten der Verläufe. Hierdurch ergibt sich in vorteilhafter Weise eine zeitlich schnelle und rechentechnisch einfach implementierbare Bestimmung von ähnlichen Verläufen.

In einer weiteren Ausführungsform wird ein Referenzverlauf in Abhängigkeit der eingangsdatenpunktspezifischen Verläufe bestimmt. Wie vorhergehend erläutert können in der Trainingsphase eingangsdatenpunktspezifische Verläufe der Prädiktionsqualitätswerte bestimmt werden. Dann kann für alle oder ausgewählte aber nicht alle dieser Verläufe geprüft werden, ob sich dieser als Referenzverlauf qualifiziert oder nicht. Hierbei kann die Anzahl von Referenzverläufen begrenzt sein, z.B. auf einen vorbestimmten Maximalwert. Ist die Anzahl von als Referenzverlauf klassifizierten Verläufen größer als der Maximalwert, so können z.B. nur die auf den Maximalwert begrenzte Anzahl von Verläufen als Referenzverlauf festgelegt werden, die das Zuverlässigkeitskriterium am besten erfüllen. Wird z.B. ein Zuverlässigkeitsmaß bestimmt, welches die Zuverlässigkeit bzw. die Prädiktionsqualität repräsentiert, und ist das Zuverlässigkeitskriterium erfüllt, wenn das Zuverlässigkeitsmaß größer als ein vorbestimmter Schwellwert ist, so können z.B. nur die auf den Maximalwert begrenzte Anzahl von Verläufen als Referenzverlauf festgelegt werden, denen das höchste Zuverlässigkeitsmaß zugeordnet ist. Hierdurch ergibt sich in vorteilhafter Weise eine modellspezifische Bestimmung der Referenzverläufe, was wiederum die Selektionsqualität für das spezifische MLM verbessert.

In einer weiteren Ausführungsform wird ein Referenzverlauf in Abhängigkeit der Verläufe einer Menge ähnlicher Verläufe bestimmt. Insbesondere kann für jede Menge ähnlicher Verläufe - wie vorhergehend erläutert - ein Durchschnittsverlauf bestimmt werden, wobei dann für alle oder ausgewählte aber nicht alle dieser Verläufe geprüft werden, ob sich dieser als Referenzverlauf qualifiziert oder nicht. Auch in dieser Ausführungsform kann die Anzahl von Referenzverläufen begrenzt sein, wobei auf die diesbezüglichen vorhergehenden Ausführungen verwiesen wird. Hierdurch ergibt sich in vorteilhafter Weise eine einfache und ebenfalls modellspezifische Bestimmung der Referenzverläufe. Insbesondere kann die Anzahl der Referenzverläufe ohne oder nur mit geringem Informationsverlust reduziert werden, wobei auch eine gute Selektionsqualität erreicht wird.

In einer weiteren Ausführungsform wird ein eingangsdatenpunktspezifischer Verlauf oder ein mengenspezifischer Verlauf als erster Verlauf bestimmt, wobei der erste Verlauf als Referenzverlauf klassifiziert wird, wenn eine Fläche unter dem ersten Verlauf größer als ein vorbestimmter Schwellwert ist. Alternativ oder kumulativ kann der erste Verlauf als Referenzverlauf klassifiziert werden, wenn die Fläche größer als eine Fläche unter mindestens einem weiteren Verlauf ist. In dieser Ausführungsform bildet also die Fläche unter dem Verlauf eine Zuverlässigkeitsmaß und die Auswertung des Zuverlässigkeitskriteriums beinhaltet den Vergleich mit dem Schwellwert und/oder weiteren Flächen. Hierdurch ergibt sich in vorteilhafter Weise eine rechentechnisch einfach implementierbare und gleichzeitig zuverlässige Klassifizierung von Referenzverläufen. Selbstverständlich ist es aber vorstellbar, dass auch andere Zuverlässigkeitsmaße verwendet werden.

In einer weiteren Ausführungsform ist der Verlauf der mindestens zwei Prädiktionsqualitätswerte ähnlich zu dem mindestens einen Referenzverlauf, wenn eine Abweichung zwischen dem Verlauf der mindestens zwei Prädiktionsqualitätswerte und dem Referenzverlauf kleiner als ein vorbestimmter Schwellwert ist, wobei die Abweichung in gleicher Weise bestimmt wird wie die Abweichung zwischen den eingangsdatenpunktspezifischen Verläufen. Mit anderen Worten wird das Ähnlichkeitsmaß zur Bewertung der Ähnlichkeit mit einem Referenzverlauf in gleicher Weise bestimmt und ausgewertet wie bei erläuterten Clustering. Hierdurch verbessert sich in vorteilhafter Weise die Implementierbarkeit des Verfahrens, da es nicht erforderlich ist, die Bestimmung unterschiedlicher Ähnlichkeitsmaße zu implementieren.

Weiter vorgeschlagen wird ein Verfahren zur Verarbeitung von Eingangsdatenpunkten durch ein maschinell erlerntes Prädiktionsmodell, umfassend die Schritte:
- Erfassen oder Empfangen eines Eingangsdatenpunkts,
- Selektion des Eingangsdatenpunkts für die Verarbeitung gemäß einer der in dieser Offenbarung beschriebenen Ausführungsformen, insbesondere gemäß dem vorhergehend erläuterten Bestimmungsschritt, Prüfungsschritt und Selektionsschritt,
- Verarbeitung des selektierten Eingangsdatenpunkts durch das erlernte Prädiktionsmodell zur Erzeugung eines Ausgangsdatenpunkt.

Hierbei kann der Eingangsdatenpunkt durch das vorhergehend erläuterte Selektionsmodell verarbeitet werden. Allerdings ist es nicht zwingend, dass das Prädiktionsmodell das Selektionsmodell ist. Es kann insbesondere, wie nachfolgend noch erläutert, auch ein vom Selektionsmodell verschiedenes MLM sein.

Dient das Verfahren zur Qualitätsprüfung eines Bauteils, so kann der Ausgangsdatenpunkt repräsentieren, ob das Bauteil vorbestimmten Qualitätsanforderungen genügt. Dient das Verfahren zur insbesondere medizinischen Diagnose, so kann der Ausgangsdatenpunkt die Diagnose repräsentieren. Dient das Verfahren zur Sortierung einer Postsendung zur Weiterverarbeitung bzw. zum Weitertransport, so kann der Ausgangsdatenpunkt eine Sortier-Aussage bezüglich der weiteren Verarbeitung/des weiteren Transports repräsentieren. In allen Fällen kann der Eingangsdatenpunkt ein Abbild sein.

Die Verarbeitung kann eine automatisierte Verarbeitung sein. Insbesondere kann die Verarbeitung des selektierten Eingangsdatenpunkts erfolgen, ohne dass eine weitere Bedingung erfüllt sein muss, z.B. ohne zusätzliche Nutzerfreigabe. Mit anderen Worten können durch das maschinell erlernte Prädiktionsmodell automatisiert nur die Eingangsdatenpunkte verarbeitet werden, die wie vorhergehend erläutert selektiert wurden.

Hierdurch ergibt sich in vorteilhafter Weise, dass Ausgangsdatenpunkte durch das MLM nur dann erzeugt werden, wenn mit ausreichender Wahrscheinlichkeit sichergestellt ist, dass die Verarbeitungsqualität, insbesondere die Prädiktionsqualität, für den entsprechenden Eingangsdatenpunkt ausreichend hoch ist. Dies wiederum stellt sicher, dass automatisierte Anwendungen, z.B. eine automatisierte Qualitätsprüfung, mit guter Verarbeitungsqualität durchgeführt werden, was wiederum eine Zuverlässigkeit der Anwendung sicherstellt. Durch eine im Vergleich geringe Fehlerrate bei einer Verarbeitung gemäß dem vorgeschlagenen Verfahren kann ein früher produktiver Einsatz des Verfahrens erfolgen. Dies führt zu einem geringen Einführungsrisiko und die Kosten werden reduziert. Der frühzeitige Einsatz erhöht zudem die Akzeptanz und das Verständnis der Anwender für das System.

Es ist möglich, dass das Training des Selektionsmodells mit einer Trainings-Recheneinrichtung durchgeführt wird, während die genannten Verfahrensschritte, insbesondere der Verarbeitungsschritt, dann anschließend mit einer Recheneinrichtung durchgeführt wird, die im Vergleich zur Trainings-Recheneinrichtung weniger leistungsfähig ist, z.B. eine geringere Taktfrequenz aufweist. Eine solche Recheneinrichtung kann Teil eines Computers oder eines eingebetteten Systems sein.

In einer weiteren Ausführungsform wird, wenn der Referenzverlauf in Abhängigkeit der Verläufe einer Menge ähnlicher Verläufe bestimmt wurde, das Prädiktionsmodell als mengenspezifisches MLM bestimmt. Ist also der Verlauf von Prädiktionsqualitätswerten für den Eingangsdatenpunkt ähnlich zu einem mengenspezifischen Referenzverlauf, so kann aus dem Trainingsdatensatz eine Teilmenge extrahiert werden. Diese Teilmenge kann die Trainings-Eingangsdatenpunkte umfassen, für die die der Menge zugeordneten Verläufe bestimmt wurden. Ebenfalls kann die Teilmenge die Trainings-Ausgangsdatenpunkte umfassen, die diesen Trainings-Eingangsdatenpunkten zugeordnet sind. Dann kann das mengenspezifische MLM mit dieser Teilmenge trainiert werden. Somit kann also einem Referenzverlauf ein mengenspezifisches MLM zugeordnet werden (und umgekehrt).

Es ist insbesondere möglich, dass für jede Menge ähnlicher Verläufe oder für jede Menge ähnlicher Verläufe, für die ein mengenspezifischer Verlauf als Referenzverlauf klassifiziert werden konnte, ein mengenspezifisches MLM zu trainieren und dann in abrufbarer oder auswertbarer Weise abzuspeichern. Wird dann der Verlauf von Prädiktionsqualitätswerten für den Eingangsdatenpunkt als ähnlich zu einem mengenspezifischen Referenzverlauf klassifiziert, so kann das abgespeicherte mengenspezifische MLM genutzt werden, um den Ausgangsdatenpunkt zu bestimmen. Ist der Verlauf der mindestens zwei Prädiktionsqualitätswerte ähnlich zu mehr als einem Referenzverlauf, so kann das mengenspezifische MLM genutzt werden, das dem ähnlichste Referenzverlauf zugeordnet ist.

Hierdurch kann in vorteilhafter Weise ein Rechenaufwand zur Bestimmung des Ausgangsdatenpunkts reduziert werden, da insbesondere im Vergleich zum Selektionsmodell ein in der Regel kleiner dimensioniertes MLM ausgewertet werden kann. Auch kann die Zeitdauer zur Erzeugung des Ausgangsdatenpunkts verringert werden. Somit kann eine Lauffähigkeit der Verarbeitung auf einer Hardware mit beschränkten Ressourcen gewährleistet werden. Ebenfalls kann eine Verbesserung der Verarbeitungsqualität erreicht werden, da durch das mengenspezifische MLM fehlerhafte Prädiktionen reduziert oder ganz vermieden werden können. Mit anderen Worten können MLM mit geringerer Komplexität eingesetzt werden. Dadurch können etwa Ressourcenlimitierungen, Anforderungen an Interpretierbarkeit oder zulässige Fehlerraten bereits bei der Modellauswahl berücksichtigt werden. Modelle mit geringerer Komplexität bieten zudem eine Vielzahl an Vorteilen, so sind in der Regel Unsicherheitsbestimmungen präziser, Daten können schneller verarbeitet werden und teilweise kann ein Nachweis der Kompatibilität mit Sicherheitsbestimmungen durch bekannte mathematische Interpretierbarkeit vereinfacht werden.

In einer weiteren Ausführungsform wird im Fall, dass der Verlauf der mindestens zwei Prädiktionsqualitätswerte nicht ähnlich zu einem Referenzverlauf ist,
- ein Warnsignal erzeugt und/oder
- eine Information über die Unähnlichkeit erzeugt und einem erzeugten Ausgangsdatenpunkt zugeordnet oder
- der Eingangsdatenpunkt nicht durch das Prädiktionsmodell verarbeitet wird.

Das Warnsignal kann durch eine Ausgabeeinrichtung ausgegeben werden, z.B. an einen Nutzer. Die Ausgabeeinrichtung kann in diesem Fall z.B. Ausgabeeinrichtung für ein visuell, akustisch, haptisch oder ein in anderer Weise wahrnehmbares Signal sein.

Es ist möglich, dass der Eingangsdatenpunkt durch das Prädiktionsmodell zur Erzeugung eines Ausgangsdatenpunkt verarbeitet wird, wobei dem Ausgangsdatenpunkt die Information über die Unähnlichkeit zugeordnet wird. Diese Information kann Teil des Ausgangsdatenpunkts sein. Diese Information kann dann bei einer nachfolgenden Verarbeitung des Ausgangsdatenpunkts berücksichtigt werden, insbesondere als Qualitätsmaß für die Prädiktionsqualität.

Alternativ oder kumulativ wird der Eingangsdatenpunkt nicht durch das Prädiktionsmodell verarbeitet, wenn der Verlauf der mindestens zwei Prädiktionsqualitätswerte nicht ähnlich zu einem Referenzverlauf ist.

In jedem dieser Fälle kann eine Maßnahme zu Fehlerbehandlung initiiert werden, wenn ein Warnsignal erzeugt wurde. Diese kann z.B. durch ein übergeordnetes System zumindest teilweise ausgeführt werden. Es ist z.B. möglich, einem Nutzer das Warnsignal auf einer Anzeigeeinrichtung anzuzeigen. Alternativ oder kumulativ kann ihm der Eingangsdatenpunkt sowie eine Aufforderung zur Annotation dieses Eingangsdatenpunkts angezeigt werden. Der Nutzer kann dann den Eingangsdatenpunkt annotieren, z.B. durch eine Nutzereingabe, und ihm einen Ausgangsdatenpunkt zuordnen. Diese kann über eine Eingabeeinrichtung erfolgen mit der ein Nutzer Eingabesignale erzeugen kann. Die Eingabeeinrichtung kann zur Erfassung von haptisch, akustisch, optisch oder in anderer Weise erfassbaren Eingangssignalen ausgebildet sein.

Insgesamt ergibt sich in vorteilhafter Weise, dass bei einem nicht zur zuverlässigen Verarbeitung geeigneten Eingangsdatenpunkt geeignete Maßnahmen zu einer weiteren Behandlung eines solchen Punktes eingeleitet werden.

In einer weiteren Ausführungsform wird für einen als nicht zur Verarbeitung klassifizierten Eingangsdatenpunkt ein Ausgangsdatenpunkt bestimmt. Dies kann z.B. durch die erläuterte Aufforderung zur Annotation sowie die Auswertung einer Nutzereingabe zur Annotation erfolgen. Weiter wird das Selektionsmodell und/oder das Prädiktionsmodell in Abhängigkeit dieser Datenpunkte trainiert oder angepasst. Insbesondere kann der erläuterte Trainingsdatensatz ergänzt und das Modell neu trainiert oder aktualisiert werden. Bei einer Anpassung oder Aktualisierung erfolgt kein erneutes Training des Modells, wobei dennoch die Informationen dieser Datenpunkte in das bereits bestehende Modell integriert werden können.

Insgesamt kann auch das vorhergehend erläuterte Clustering angepasst werden, also die Zuordnung eingangsdatenpunktspezifischer Verläufe von Prädiktionsqualitätswerten zu Mengen ähnlicher Verläufe. Hierdurch ergibt sich in vorteilhafter Weise, dass das MLM weiterentwickelt werden kann, wodurch einerseits die Zuverlässigkeit der Selektion für nachfolgende Eingangsdatenpunkte erhöht werden kann. Andererseits kann auch eine Verarbeitungsqualität erhöht werden, insbesondere kann für eine größere Varianz von Eingangsdatenpunkten eine gute Verarbeitungsqualität sichergestellt werden.

Die Einbindung von Expertenfeedback während des Betriebs erlaubt eine kontinuierliche Verbesserung des Selektionsmodells sowie der Selektion. So ist es möglich, den Automatisierungsgrad nachträglich und während der Anwendung zu verbessern. Zudem können Änderungen in den Eingangsdatenpunkten (etwa durch Änderungen im Produktionsumfeld) so automatisch in das System eingepflegt werden.

In einer weiteren Ausführungsform wird in Abhängigkeit des Ausgangsdatenpunkts ein externes System gesteuert wird. Das externe System kann insbesondere ein steuerbares System sein. Dann kann in Abhängigkeit des Ausgangsdatenpunkts ein Steuersignal für dieses System erzeugt werden. Auch kann der Ausgangsdatenpunkt ein Steuersignal oder einen Teil eines solchen Signals bilden. Das externe System kann eine steuerbare Einrichtung umfassen, deren Betrieb durch das Steuersignal gesteuert werden kann. Die steuerbare Einrichtung kann z.B. ein Aktor sein oder einen solchen umfassen. Z.B. kann das externe System eine steuerbare Positioniereinrichtung für einen Endeffektor, z.B. einen Roboter, umfassen. Mit dieser können z.B. als defekt klassifizierte Bauteile aussortiert werden. Auch kann die steuerbare Einrichtung eine Anzeigeeinrichtung oder eine sonstige Einrichtung, deren Betriebsweise durch ein Steuersignal beeinflusst werden kann, sein. Auch kann die steuerbare Einrichtung eine Einrichtung zur Weiterverarbeitung des Ausgangsdatenpunkts sein, die z.B. eine Datenbank umfassen oder als solche ausgebildet sein kann. Dann können automatisiert bestimmte Diagnoseergebnisse weiterverarbeitet werden. Hierdurch ergibt sich in vorteilhafter Weise eine zuverlässige Steuerung des externen Systems.

In einer Ausführungsform kann das externe System eine Sortieranlage sein oder eine Sortieranlage umfassen. In diesem Fall kann der Ausgangsdatenpunkt ein Sortier-Befehl für ein Objekt repräsentieren oder es kann der Sortier-Befehl in Abhängigkeit des Ausgangsdatenpunkts bestimmt werden. Vorstellbar ist, dass der Ausgangsdatenpunkt eine Qualität eines Bauteils repräsentiert oder repräsentiert, ob das Bauteil vorbestimmte Qualitätsanforderungen erfüllt. Vorstellbar ist auch, dass der Ausgangsdatenpunkt ein Adressfeld einer Postsendung repräsentiert. Dann kann der Betrieb einer Sortiermaschine in Abhängigkeit des Ausgangsdatenpunkts gesteuert werden. Erfüllt das Bauteil z.B. die Qualitätsanforderung, so kann es durch die Sortiermaschine zur Weiterverarbeitung als Ausbeute sortiert und gegebenenfalls weitertransportiert werden, z.B. durch ein Transportmittel wie ein Förderband. Erfüllt das Bauteil die Qualitätsanforderung nicht, so kann es durch die Sortiermaschine zur Weiterverarbeitung als Ausschuss sortiert und gegebenenfalls weitertransportiert werden. Eine Postsendung kann durch die Sortiermaschine adressspezifisch sortiert und gegebenenfalls weitertransportiert werden.

In einer Ausführungsform kann das externe System eine Anzeigeeinrichtung zur Anzeige einer Diagnose sein, insbesondere einer medizinischen Diagnose. In diesem Fall kann der Ausgangsdatenpunkt eine Diagnose repräsentieren oder es kann ein Anzeigebefehl in Abhängigkeit des Ausgangsdatenpunkts bestimmt werden.

In einer weiteren Ausführungsform wird der Eingangsdatenpunkt mit einer Bilderfassungseinrichtung erfasst. Eine Bilderfassungseinrichtung kann eine Einrichtung zur Erzeugung eines Bildsignals bezeichnen, das insbesondere ein zwei- oder dreidimensionales Abbild eines Objekts repräsentieren kann. Das Abbild kann ein Farbabbild, insbesondere ein RGB-Abbild, oder ein Graustufen-Abbild, insbesondere ein Monochrom-Abbild, sein. Auch kann das Abbild eine geometrische Form des Objekts repräsentieren. Auch kann das Abbild ein Durchleuchtungsabbild des Objekts sein. Erfahrungen und Simulationen haben gezeigt, dass derartige Eingangsdatenpunkte besonders zuverlässig mit dem vorgeschlagenen Verfahren selektiert werden können.

Das vorgeschlagene Verfahren zur Selektion bzw. zur Verarbeitung kann ein computerimplementiertes Verfahren sein. Es kann daher computergestützt ausgeführt werden und insbesondere mittels dem nachstehend erläuterten Computerprogrammprodukt oder der Vorrichtung. Insbesondere kann jeder der erläuterten Verfahrensschritte, vorzugsweise der Bestimmungs-, Prüf- und Selektionsschritt, zumindest teilweise, überwiegend oder vollständig computergestützt oder, mit anderen Worten, automatisch ausgeführt werden. Es ist aber auch möglich, zumindest einzelne Verfahrensschritte teilweise (d. h. semi-automatisch) oder vollständig manuell auszuführen, insbesondere basierend auf Eingaben eines Nutzers. Insbesondere das Bestimmen eines Ausgangsdatenpunkts für einen als nicht zur Verarbeitung klassifizierte Eingangsdatenpunkt kann benutzergesteuert oder manuell erfolgen.

Weiter vorgeschlagen wird ein System zur Selektion von Eingangsdatenpunkten zur Verarbeitung durch ein maschinell erlerntes Prädiktionsmodell, umfassend zumindest:
- eine Erfassungseinrichtung zur Erfassung eines Eingangsdatenpunkts und/ oder eine Empfangseinrichtung zum Empfang eines Eingangsdatenpunkts,
- mindestens eine Speichereinrichtung zur Speicherung von mindestens zwei trainingsschrittspezifischen Instanzen eines Selektionsmodells, welches durch maschinelles Lernen in mehreren Trainingsschritten erzeugt wurde,
- eine Auswerteeinrichtung zur Bestimmung eines Verlaufs von mindestens zwei Prädiktionsqualitätswerten, wobei diese Prädiktionsqualitätswerte jeweils mit einer trainingsschrittspezifischen Instanz des Selektionsmodells bestimmt werden,
- eine Prüfeinrichtung zur Prüfung, ob der Verlauf der mindestens zwei Prädiktionsqualitätswerte zu mindestens einem Referenzverlauf ähnlich ist, der nach dem Training als zuverlässiger Verlauf klassifiziert wurde, und
eine Selektionseinrichtung zur Selektion des Eingangsdatenpunkts für die Verarbeitung, wenn der Verlauf der mindestens zwei Prädiktionsqualitätswerte ähnlich zu dem mindestens einen Referenzverlauf ist.

Die Erfassungseinrichtung kann ein Sensor zur Erzeugung eines Ausgangssignals sein, das den Eingangsdatenpunkt bilden kann. Auch kann der Eingangsdatenpunkt in Abhängigkeit des Ausgangssignals bestimmt werden. Die Empfangseinrichtung kann zur drahtlosen oder drahtgebundenen Datenübertragung ausgebildet sein und Teil einer Kommunikationsschnittstelle des Systems sein.

Die Speichereinrichtung kann eine primäre oder sekundäre Speichereinrichtung sein oder eine solche umfassen, z.B. ein DRAM, SRAM, ein Cache-Speicher, ein Festplattenlaufwerk, eine SSD, ein optischer Speicher, ein Cloud-Speicher, eine NAS, ein NVRAM etc.

Die Auswerteeinrichtung und die Prüfereinrichtung kann (jeweils) eine Recheneinrichtung sein oder eine solche umfassen, wobei die Recheneinrichtung ein Mikrocontroller oder eine integrierte Schaltung ein oder eine(n) solche(n) umfassen kann. Die Auswerte- und Prüfeinrichtung können als separate oder als gemeinsame Einrichtung(en) ausgeführt sein.

Das vorgeschlagene System ist konfiguriert, ein Verfahren zur Selektion gemäß einer der in dieser Offenbarung beschriebenen Ausführungsformen mit den bereits erläuterten Vorteilen durchzuführen.

Weiter vorgeschlagen wird ein System zur Verarbeitung von Eingangsdatenpunkten durch ein maschinell erlerntes Prädiktionsmodell. Dieses umfasst ein System zur Selektion von Eingangsdatenpunkten gemäß einer der in dieser Offenbarung beschriebenen Ausführungsformen. Weiter umfasst das System zur Verarbeitung eine Verarbeitungseinrichtung zur Verarbeitung des Eingangsdatenpunkt durch das Prädiktionsmodell zur Erzeugung eines Ausgangsdatenpunkts. Diese kann ebenfalls als Recheneinrichtung ausgebildet sein oder eine solche umfassen. Insbesondere können die vorhergehend erläuterte Auswerteeinrichtung und die Verarbeitungseinrichtung als separate oder als gemeinsame Einrichtung(en) ausgeführt sein. Die Auswerteeinrichtung und/oder die Verarbeitungseinrichtung können jeweils derart konfiguriert sein, dass die Auswertung eines MLM mit ihnen möglich ist. Das vorgeschlagene System ist konfiguriert, ein Verfahren zur Verarbeitung gemäß einer der in dieser Offenbarung beschriebenen Ausführungsformen mit den bereits erläuterten Vorteilen durchzuführen. Das System kann auch als Automatisierungssystem bezeichnet werden. Dieses ist konfiguriert zu prüfen, ob sich ein Eingangsdatenpunkt für eine automatisierte Verarbeitung durch ein MLM zur Erzeugung eines Ausgangsdatenpunkts qualifiziert. Ist dies der Fall, so erfolgt die Erzeugung eines Ausgangsdatenpunkts, der dann für eine Weiterverarbeitung, insbesondere die Steuerung eines externen Systems, genutzt werden kann. Ist dies nicht der Fall, so erfolgt keine Erzeugung eines solchen Ausgangsdatenpunkts.

Wie vorhergehend erläutert kann das System zur Verarbeitung Bestandteil eines Systems zur Qualitätsprüfung, eines Systems zur Sortierung einer Postsendung oder zur Bestimmung einer Diagnose sein. Diese Systeme können zusätzlich - wie ebenfalls vorhergehend erläutert - mindestens eine steuerbare Einrichtung umfassen, wobei in Abhängigkeit des Ausgangsdatenpunkts ein Steuersignal für diese steuerbare Einrichtung erzeugt wird. Insbesondere kann somit eine automatisierte Steuerung der mindestens einen steuerbaren Einrichtung erfolgen.

Weiter wird ein Computerprogrammprodukt mit einem Computerprogramm vorgeschlagen, wobei das Computerprogramm Softwaremittel zur Ausführung ausgewählter oder aller Schritte des Verfahrens zur Selektion von Eingangsdatenpunkten bzw. zur Verarbeitung von Eingangsdatenpunkten, insbesondere aber des Bestimmungsschritts, des Prüfschritts und des Selektionsschritts sowie gegebenenfalls des Verarbeitungsschritts, gemäß einer der in dieser Offenbarung beschriebenen Ausführungsformen umfasst, wenn das Computerprogramm von oder in einem Computer oder einem Automatisierungssystem ausgeführt wird. Ferner wird ein Programm beschrieben, das, wenn es auf einem Computer oder in einem Automatisierungssystem abläuft, den Computer oder das Automatisierungssystem veranlasst, ausgewählte oder alle Schritte dieses/dieser Verfahren(s) durchzuführen, und/oder ein Programmspeichermedium, auf dem das Programm gespeichert ist (insbesondere in einer nicht-transitorischen Form), und/oder zu einem Computer, der das Programmspeichermedium umfasst, und/oder eine (physikalischen, z.B. elektrische, z.B. technisch erzeugte) Signalwelle, z.B. eine digitale Signalwelle, die Informationen trägt, die das Programm, z.B. das vorgenannte Programm, darstellen, das z.B. Codemittel umfasst, die geeignet sind, die erläuterten Verfahrensschritte durchzuführen. Dies bedeutet, dass das erfindungsgemäße Verfahren zum Beispiel ein computerimplementiertes Verfahren ist. Beispielsweise können alle Schritte oder nur einige der Schritte (d.h. weniger als die Gesamtzahl der Schritte) des erfindungsgemäßen Verfahrens von einem Computer ausgeführt werden. Eine Ausführungsform des computerimplementierten Verfahrens ist eine Verwendung des Computers zur Durchführung eines Datenverarbeitungsverfahrens. Der Computer umfasst zum Beispiel mindestens einen Mikrocontroller oder Prozessor und zum Beispiel mindestens einen Speicher, um die Daten (technisch) zu verarbeiten, zum Beispiel elektronisch und/oder optisch. Der Prozessor besteht beispielsweise aus einer Substanz oder Zusammensetzung, die ein Halbleiter ist, beispielsweise zumindest teilweise n- und/oder p-dotierter Halbleiter, beispielsweise mindestens ein II-, III-, IV-, V-, Vl-Halbleitermaterial, beispielsweise (dotiertes) Silizium und/oder Galliumarsenid. Ein Computer ist z.B. jede Art von Datenverarbeitungsgerät, z.B. elektronisches Datenverarbeitungsgerät. Ein Computer kann ein Gerät sein, das allgemein als solches angesehen wird, z. B. Desktop-PCs, Notebooks, Netbooks usw., kann aber auch ein beliebiges programmierbares Gerät sein, wie z. B. ein Mobiltelefon oder ein eingebetteter Prozessor. Ein Computer kann beispielsweise aus einem System (Netzwerk) von "Sub-Computern" bestehen, wobei jeder Sub-Computer einen eigenständigen Computer darstellt.

Das Computerprogrammprodukt ermöglicht in vorteilhafter Weise die Durchführung eines erläuterten Verfahrens gemäß einer der in dieser Offenbarung beschriebenen Ausführungsformen, für die zuvor technische Vorteile beschrieben worden sind.

Die Erfindung wird anhand von Ausführungsbeispielen näher erläutert. Die Figuren zeigen:
- Fig. 1: ein schematisches Flussdiagramm eines erfindungsgemäßen Verfahrens,
- Fig. 2: ein schematisches Flussdiagramm eines Teils eines erfindungsgemäßen Verfahrens,
- Fig. 3: ein beispielhafter Verlauf von Prädiktionsqualitätswerten,
- Fig. 4: ein weiteres schematisches Flussdiagramm eines erfindungsgemäßen Verfahrens,
- Fig. 5: ein weiteres schematisches Flussdiagramm eines erfindungsgemäßen Verfahrens,
- Fig. 6: ein schematisches Blockschaltbild eines erfindungsgemäßen Systems,
- Fig. 7: ein weiteres schematisches Blockschaltbild eines erfindungsgemäßen Systems,
- Fig. 8a: eine schematische Darstellung von für die Verarbeitung selektierten Eingangsdatenpunkten und von nicht für die Verarbeitung selektierten Eingangsdatenpunkten,
- Fig. 8b: eine schematische Darstellung von für die Verarbeitung selektierten Eingangsdatenpunkten und von nicht für die Verarbeitung selektierten Eingangsdatenpunkten nach einer Modellanpassung.

Nachfolgend bezeichnen gleiche Bezugszeichen Elemente mit gleichen oder ähnlichen technischen Merkmalen.

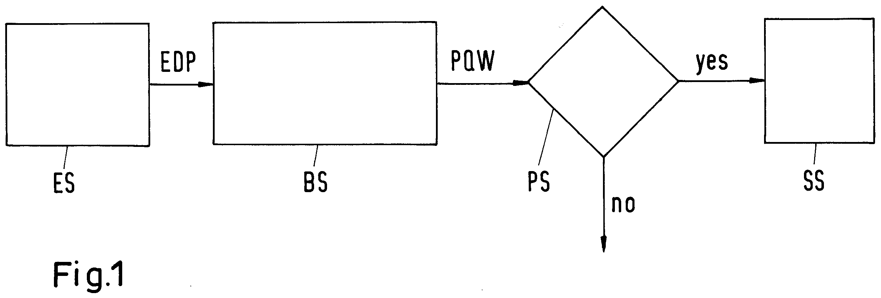

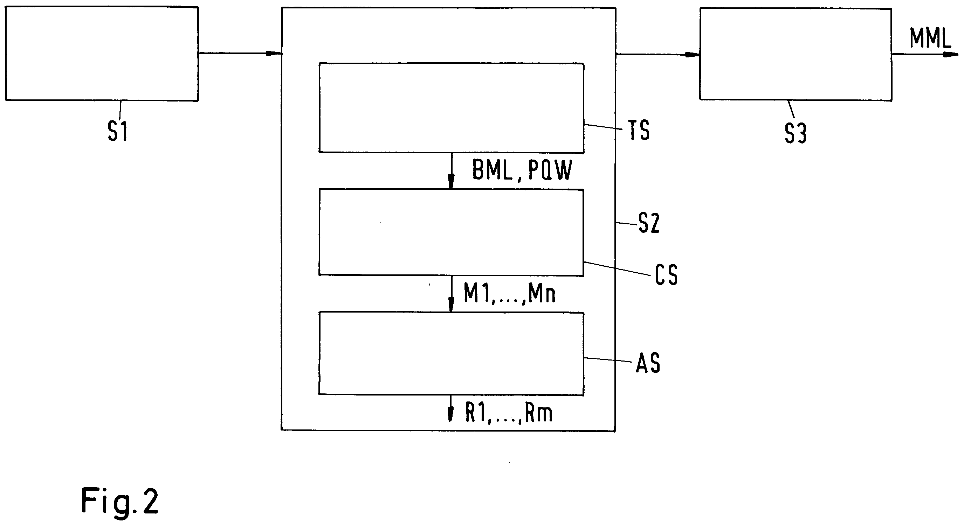

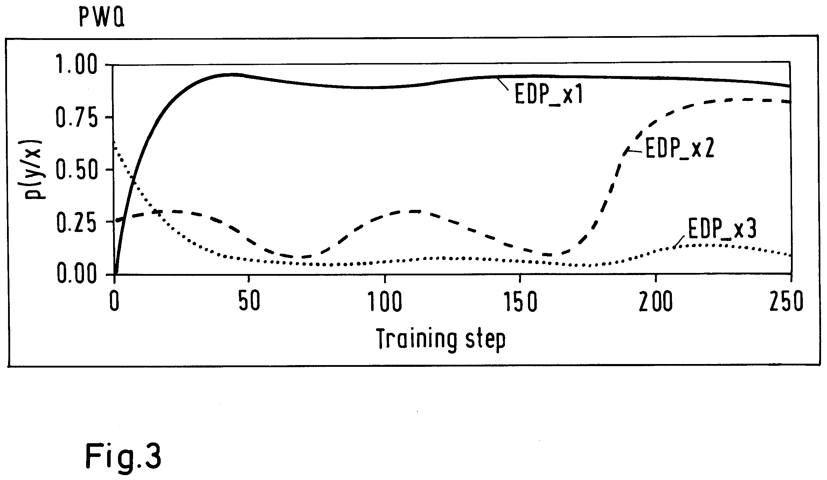

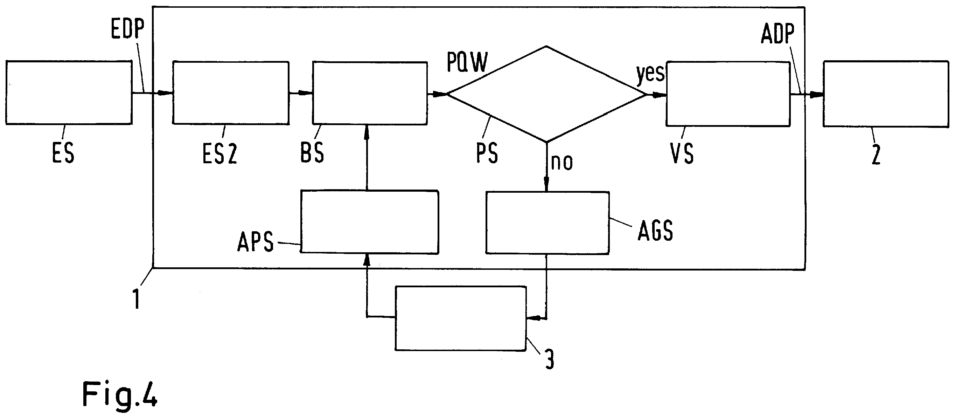

Fig. 1 zeigt ein schematisches Flussdiagramm eines erfindungsgemäßen Verfahrens. Dargestellt ist ein Erfassungs- oder Empfangsschritt ES, wobei in diesem Schritt S1 ein Eingangsdatenpunkt EDP erfasst oder empfangen wird. In einem Bestimmungsschritt BS wird für diesen Eingangsdatenpunkt EDP ein Verlauf von mindestens zwei Prädiktionsqualitätswerten PQW (siehe Fig. 3) bestimmt, wobei diese Prädiktionsqualitätswerte PQW jeweils mit einer trainingsschrittspezifischen Instanz eines Basismodells BML (siehe Fig. 2) bestimmt werden, wobei das Basismodell BML ein maschinell erlerntes Selektionsmodell bildet. Der Prädiktionsqualitätswert PQW kann insbesondere im Rahmen einer Erzeugung eines Ausgangsdatenpunkts ADP (siehe Fig. 4) durch ein maschinell erlerntes Modell bestimmt werden. Zur Durchführung des Bestimmungsschritts BS können die trainingsschrittspezifischen Instanzen aus einer

Speichereinrichtung abgerufen und dann zur Bestimmung des Prädiktionsqualitätswerts PQW ausgewertet werden. In einem Prüfschritt PS wird geprüft, ob der Verlauf der mindestens zwei Prädiktionsqualitätswerte PQW zu mindestens einem Referenzverlauf ähnlich ist, der nach dem Training des Basismodells BML als zuverlässiger Verlauf klassifiziert wurde. Ist diese Bedingung erfüllt, so wird in einem Selektionsschritt SS der Eingangsdatenpunkt EDP für die Verarbeitung durch ein maschinell erlerntes Prädiktionsmodell selektiert, also der Eingangsdatenpunkt EDP als für die Verarbeitung durch das Prädiktionsmodell geeigneter Eingangsdatenpunkt klassifiziert. Andernfalls wird der Eingangsdatenpunkt EDP als nicht für die Verarbeitung durch das Prädiktionsmodell geeigneter Eingangsdatenpunkt klassifiziert.

Fig. 2 zeigt ein schematisches Flussdiagramm eines Teils eines erfindungsgemäßen Verfahrens. Hierbei erfolgt in einem ersten Schritt S1 eine Erfassung oder Bestimmung von Trainingsdaten für ein Basismodell BML, wobei die Trainingsdaten bei einer Ausbildung des Basismodells BML als überwachtes Modell Trainings-Eingangsdatenpunkte und Trainings-Ausgangsdatenpunkte und bei einer Ausbildung des Basismodells BML als unüberwachtes Modell nur Trainings-Eingangsdatenpunkte umfassen. Ein solcher Trainingsdatensatz kann z.B. erzeugt werden, indem ein Experte Trainings-Eingangsdatenpunkte mit Trainings-Ausgangsdatenpunkten annotiert. In einem zweiten Schritt S2 erfolgt in mehreren Trainingsschritten TS ein Trainieren des Basismodells BML. Mit jedem oder ausgewählten Trainingsschritt(en) wird eine trainingsschrittspezifische Instanz des Basismodells BML bestimmt, die in abrufbarer Weise gespeichert wird, insbesondere damit diese Instanz im Bestimmungsschritt BS (siehe Fig. 1) zur Bestimmung von Prädiktionsqualitätswerten PQW genutzt werden kann.

Während des Trainings wird auch für jeden oder ausgewählte Trainings-Eingangsdatenpunkte mit jedem oder ausgewählten Trainingsschritt(en) ein eingangsdatenpunkt- und trainingsschrittspezifischer Prädiktionsqualitätswert PQW bestimmt. Dann werden in einem Clusteringschritt CS die eingangsdatenpunktspezifischen Verläufe dieser Prädiktionsqualitätswerte PQW einer Menge M1, M2, ..., Mn ähnlicher Verläufe zugeordnet, wenn sie ein vorbestimmtes Ähnlichkeitskriterium erfüllen. Das vorbestimmte Ähnlichkeitskriterium kann erfüllt sein, wenn eine Abweichung zwischen den Verläufen kleiner als ein vorbestimmter Schwellwert ist. Die Abweichung kann insbesondere als Summe der euklidischen Distanz zwischen den korrespondieren trainingsschrittspezifischen Prädiktionsqualitätswerten PQW der jeweiligen Verläufe bzw. in Abhängigkeit der Summe bestimmt werden. Als Ergebnis dieses Clusteringschritts CS ist eine Anzahl n von Mengen M1, M2, ..., Mn ähnlicher Verläufe der Prädiktionsqualitätswerte bestimmt.

In einem Auswahlschritt AS werden dann die Mengen M1, M2, ..., Mn bestimmt, deren Verläufe von Prädiktionsqualitätswerten PQW sich als Referenzverlauf qualifizieren. Z.B. kann hierfür für jede Menge M1, M2, ..., Mn ein Durchschnittsverlauf bestimmt werden. Die Werte dieses Durchschnittsverlaufs können z.B. Mittelwerte der korrespondieren trainingsschrittspezifischen Prädiktionsqualitätswerte PQW aller Verläufe dieser Menge sein. Ein Verlauf, insbesondere ein solcher Durchschnittsverlauf, kann dann als Referenzverlauf klassifiziert werden, wenn eine Fläche unter diesem Verlauf größer als ein vorbestimmter Schwellwert und/oder größer als eine Fläche unter mindestens einem weiteren Verlauf ist. Die mengenspezifischen Eingangsdatenpunkte EDP, die in einen als Referenzverlauf qualifizierten Verlauf von Prädiktionsqualitätswerten PQW resultieren, bzw. deren Verlauf einer Menge zugeordnet wurde, deren Durchschnittsverlauf als Referenzverlauf qualifiziert wurde, können auch als zuverlässige Subdomäne von Eingangsdatenpunkten EDP bezeichnet werden.

As Ergebnis dieses Auswahlschritts AS ist eine Anzahl m von Mengen von Referenzverläufen R1, R2, ..., Rm bestimmt, wobei die Anzahl m insbesondere kleiner als die Anzahl n sein kann.

In einem weiteren Trainingsschritt S3 können dann subdomänenspezifische bzw. mengenspezifische maschinell erlernte Modelle MML bestimmt werden, wobei ein solches mengenspezifisches Modell dann als Prädiktionsmodell verwendet werden kann. Hierzu kann aus dem Trainingsdatensatz eine Teilmenge extrahiert werden, wobei die Teilmenge die Eingangsdatenpunkte EDP umfasst, die in einen als Referenzverlauf qualifizierten Verlauf von Prädiktionsqualitätswerten PQW resultieren bzw. deren Verlauf einer Menge zugeordnet wurde, deren Durchschnittsverlauf als Referenzverlauf qualifiziert wurde. Ebenfalls kann die Teilmenge die Trainings-Ausgangsdatenpunkte umfassen, die diesen Trainings-Eingangsdatenpunkten zugeordnet sind. Dann können die mengenspezifischen MML der jeweiligen Teilmenge trainiert werden.

Fig. 3 zeigt beispielhafte Verläufe von Prädiktionsqualitätswerten PQW über eine Vielzahl von Trainingsschritten, in dargestellten Ausführungsbeispiel 250 Trainingsschritte, bei Training eines Basismodell BML (siehe Fig. 2). Mit einer durchgezogenen Linie dargestellt ist ein erster Verlauf für einen ersten Trainings-Eingangsdatenpunkt EDP_x1. Mit einer gestrichelten Linie dargestellt ist ein zweiter Verlauf für einen zweiten Trainings-Eingangsdatenpunkt EDP_x2. Mit einer gepunkteten Linie dargestellt ist ein dritter Verlauf für dritten Trainings-Eingangsdatenpunkt EDP_x3. Die erste Kurve visualisiert, dass der dem ersten Trainings-Eingangsdatenpunkt zugeordnete Trainings-Ausgangsdatenpunkt vom Basismodell BML schneller gelernt werden konnte als die den beiden verbleibenden Trainings-Eingangsdatenpunkten zugeordneten Trainings-Ausgangsdatenpunkte. Der zweite Verlauf visualisiert, dass für den zweiten Trainings-Eingangsdatenpunkt EDP_x2 der korrespondieren Trainings-Ausgangsdatenpunkt erst später im Verlauf des Trainings korrekt gelernt wurde. Der dritte Verlauf visualisiert, dass für der Trainings-Ausgangsdatenpunkt, der dem dritten Trainings-Eingangsdatenpunkt EDP_x3 zugeordnet ist, bei Erreichen der 250 Trainingsschritte im Vergleich zu den verbleibenden Eingangs-Trainingsdatenpunkte EDP_x1, EDP_x2 eine qualitativ schlechtere Prädiktion erfolgt.

In dem dargestellten Ausführungsbeispiel könnten sich z.B. der erste Verlauf und gegebenenfalls der zweite Verlauf als Referenzverlauf qualifizieren, wobei sich der dritte Verlauf nicht als Referenzverlauf qualifiziert.

Fig. 4 zeigt ein weiteres schematisches Flussdiagramm eines erfindungsgemäßen Verfahrens. In einem Erfassungsschritt ES wird, z.B. mit einer Bilderfassungseinrichtung 3, ein Eingangsdatenpunkt EDP erfasst, der z.B. das von der Bilderfassungseinrichtung 3 erzeugte Abbild repräsentierten kann. Dieser wird an ein System 1 zur Verarbeitung des Eingangsdatenpunkts EDP übertragen und dort über eine Empfangseinrichtung in einem Empfangsschritt ES2 empfangen. Dann erfolgt, wie in Bezug auf Fig. 1 erläutert, die Durchführung eines Bestimmungs- und Prüfschritts BS, PS. Wurde der Eingangsdatenpunkt EDP als zur Verarbeitung durch ein maschinell erlerntes Prädiktionsmodell geeignet klassifiziert, so wird er in einem Verarbeitungsschritt VS durch dieses Prädiktionsmodell verarbeitet und ein Ausgangsdatenpunkt ADP erzeugt. Als Prädiktionsmodell kann das Basismodell BML oder ein davon verschiedenes Modell, z.B. ein mengenspezifisches Modell MML, verwendet werden.

Dieser Ausgangsdatenpunkt ADP kann zur Steuerung eines externen Systems 2 an dieses übertragen werden. Das externe System 2 kann eine Sortiermaschine umfassen, deren Betrieb in Abhängigkeit des Ausgangsdatenpunkts ADP gesteuert werden kann.

Wurde der Eingangsdatenpunkt EDP als nicht zur Verarbeitung durch ein maschinell erlerntes Prädiktionsmodell geeignet klassifiziert, so wird einem Ausgabeschritt AGS eine Aufforderung zur Annotation des Eingangsdatenpunkts EDP an einen Nutzer ausgegeben, z.B. auf einer Anzeigeeinrichtung. Es ist möglich, dass in dem Ausgabeschritt zusätzlich der Eingangsdatenpunkt EDP oder Informationen hierüber ausgegeben werden. Ebenfalls ist es möglich, dass der EDP durch das Prädiktionsmodell verarbeitet und der durch die Verarbeitung erzeugte Ausgangsdatenpunkt ADP oder Informationen hierüber ausgegeben werden. Dies kann für den Nutzer als Hilfestellung oder als Einblick in den internen Prozess des Prädiktionsmodells dienen. Allerdings wird ein solcher Ausgangsdatenpunkt ADP nicht zur Steuerung des externen Systems 2 verwendet.

Der Nutzer, insbesondere ein Experte, kann dann mittels einer Eingabeeinrichtung 3 die Informationen zur Annotation eingeben. In einem Anpassungsschritt APS kann dann das Prädiktionsmodell, z.B. das Basismodell BML und/oder das entsprechende mengenspezifische Modell MML, angepasst werden, insbesondere durch ein neues Training mit einem Trainingsdatensatz, der auch den Eingangsdatenpunkt EDP und den vom Nutzer eingegebenen Ausgangsdatenpunkt ADP umfasst. Selbstverständlich sind auch andere Formen der Anpassung möglich, z.B. eine Aktualisierung in Abhängigkeit der genannten Datenpunkte.

Beispielhafte Anwendungsfälle umfassen eine Qualitätskontrolle in der Produktion. Ziel ist hierbei, ein Bauteil auf Fehler zu überprüfen, wobei dies auch zuverlässig erfolgen soll, wenn das Bauteil Teil einer neuen Produktreihe ist und nicht viele Trainingsdaten für ein MLM zur Bestimmung einer Qualitätsaussage vorhanden sind und/oder selten auftretende Fehler detektiert werden sollen und/oder neue Fehlerarten, welche bisher noch nicht dokumentiert wurden, detektiert werden sollen. Im Betrieb wird jedes Bauteil mithilfe einer Kamera abgebildet. Umgebungsbedingungen wie z.B. eine Beleuchtung können sich ändern. Auch kann sich eine Relativlage (Position und/oder Orientierung) zwischen Kamera und Bauteil ändern. Mit Hilfe des vorgeschlagenen Verfahrens können dann in vorteilhafter Weise die Abbilder selektiert werden, die eine zuverlässige Aussage über die Qualität des abgebildeten Bauteils mit einem MLM ermöglichen. In Abhängigkeit der Aussage kann dann ein Sortiersystem/Roboterarm als Ausschuss klassifizierte Bauteile aussortieren. Ein Experte kann über eine Benutzerschnittstelle, welche Abbilder, die nicht
automatisch verarbeitet wurden, anzeigt, eine Qualitätsaussage eingeben und somit für solche Abbilder das Aussortieren steuern. Das entsprechende Abbild und die Qualitätsaussage des Experten werden für eine Modellverbesserung genutzt.

Ein weiterer beispielhafter Anwendungsfall ist eine Überprüfung von Schraub- und Steckverbindungen mit einem Roboterarm. So kann für ein komplexes Bauteil, welches viele Schraub- und Steckverbindungen aufweist, überprüft werden, ob alle Verbindungen korrekt ausgeführt/vorhanden sind. Dafür bewegt der Roboterarm eine Kamera, um Abbilder von dem Bauteil zu erzeugen. Analog den vorhergehenden Erläuterungen können dann mit Hilfe des vorgeschlagenen Verfahrens die Abbilder selektiert werden, die eine zuverlässige Aussage über die korrekte Ausführung von Verbindungen mit einem MLM ermöglichen. In Abhängigkeit der Aussage kann dann ein Sortiersystem/Roboterarm nicht korrekt ausgeführte Bauteile aussortieren.

Ein weiterer Anwendungsfall können (medizinische) Daten wie etwa Röntgenaufnahmen von einem Objekt erfasst werden. Analog den vorhergehenden Erläuterungen können dann mit Hilfe des vorgeschlagenen Verfahrens die Aufnahmen selektiert werden, die eine zuverlässige (medizinische) Diagnose ermöglichen. In Abhängigkeit der Aussage kann dann eine Anzeigeeinrichtung angesteuert werden, um Informationen über die Diagnose an einen Nutzer auszugeben.

Weitere beispielhafte Anwendungsfälle umfassen eine automatisierte Inspektion für Wartungsarbeiten, eine visuelle Kontrolle in der Kommissionierung, eine Kontrolle der Einhaltung von Sicherheitsmaßnahmen (z.B. das Tragen von Sicherheitsausrüstung).

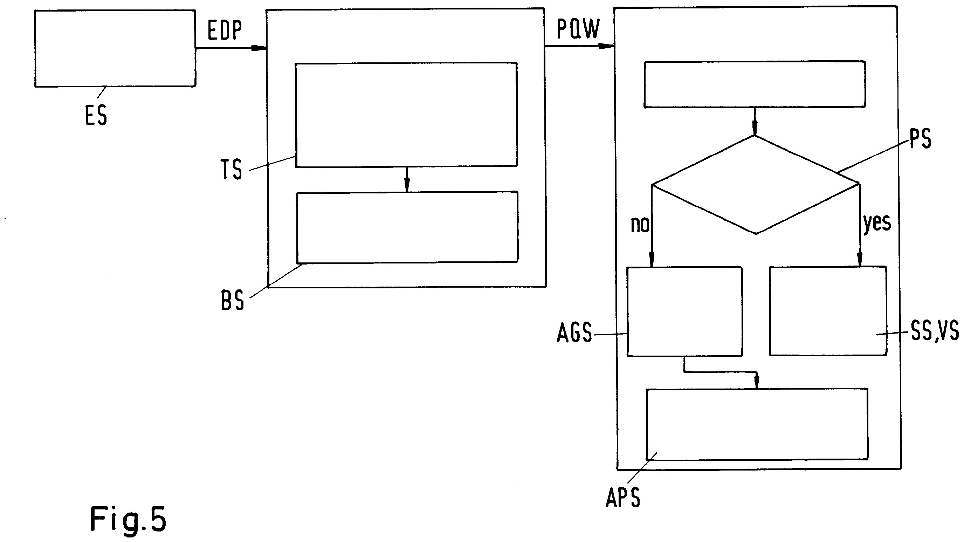

Fig. 5 zeigt ein weiteres schematisches Flussdiagramm eines erfindungsgemäßen Verfahrens. In einem Erfassungsschritt ES wird ein Eingangsdatenpunkt EDP erfasst. Unter Nutzung von trainingsschrittspezifischen Instanzen eines in mehreren Trainingsschritten TS trainierten Basismodells BML, welches als Selektionsmodell dient, wird dann in einem Bestimmungsschritt BS ein Verlaufs von mindestens zwei Prädiktionsqualitätswerten PQW bestimmt. In einem Prüfschritt PS wird dann geprüft, ob der Verlauf der mindestens zwei Prädiktionsqualitätswerte PQW zu mindestens einem Referenzverlauf ähnlich ist, der nach dem Training des Basismodells BML als zuverlässiger Verlauf klassifiziert wurde. Ist diese Bedingung erfüllt, so wird in einem Selektionsschritt SS der Eingangsdatenpunkt EDP für die Verarbeitung durch ein Prädiktionsmodell selektiert, also der Eingangsdatenpunkt EDP als für die Verarbeitung durch das Prädiktionsmodell geeigneter Eingangsdatenpunkt klassifiziert und der Eingangsdatenpunkt EDP durch das Prädiktionsmodell, welches durch das Basismodell BML oder ein vorab trainiertes mengenspezifisches Modell MML gebildet sein kann, zur Erzeugung eines Ausgangsdatenpunkts ADP (siehe Fig. 4) verarbeitet. Andernfalls wird der Eingangsdatenpunkt EDP als nicht für die Verarbeitung durch das Prädiktionsmodell geeigneter Eingangsdatenpunkt klassifiziert und einem Ausgabeschritt AGS eine Aufforderung zur Annotation des Eingangsdatenpunkts EDP an einen Nutzer ausgegeben. In einem Anpassungsschritt APS kann dann das Selektionsmodell und/oder das Prädiktionsmodell angepasst werden.

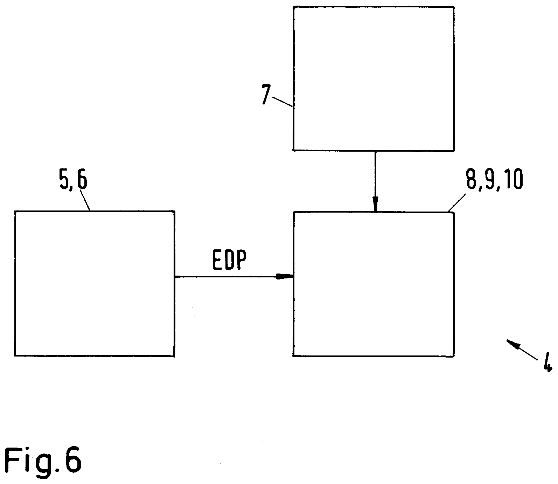

Fig. 6 zeigt ein schematisches Blockschaltbild eines erfindungsgemäßen Systems 4 zur Selektion von Eingangsdatenpunkten EDP zur Verarbeitung durch ein Prädiktionsmodell. Das System 4 umfasst eine Erfassungseinrichtung 5 zur Erfassung eines Eingangsdatenpunkts und/oder eine Empfangseinrichtung 6 zum Empfang eines Eingangsdatenpunkts EDP. Ebenfalls umfasst das System 4 eine Speichereinrichtung 7 zur Speicherung von mindestens zwei trainingsschrittspezifischen Instanzen eines als Basismodells BML (siehe Fig. 2) bezeichneten Selektionsmodells und eine Auswerteeinrichtung 8 zur Bestimmung eines Verlaufs von mindestens zwei Prädiktionsqualitätswerten PQW (siehe Fig. 1), wobei diese Prädiktionsqualitätswerte PQW jeweils mit einer trainingsschrittspezifischen Instanz des Basismodells bestimmt werden. Ebenfalls umfasst das System 4 eine Prüfeinrichtung 9 zur Prüfung, ob der Verlauf der mindestens zwei Prädiktionsqualitätswerte PQW zu mindestens einem Referenzverlauf ähnlich ist, der nach dem Training als zuverlässiger Verlauf klassifiziert wurde. Auch diese Referenzverläufe R1, R2, ..., Rm (siehe Fig. 2) können in der Speichereinrichtung 7 gespeichert sein. Ebenfalls umfasst das System 4 eine Selektionseinrichtung 10 zur Selektion des Eingangsdatenpunkts EDP für die Verarbeitung, wenn der Verlauf der mindestens zwei Prädiktionsqualitätswerte PQW ähnlich zu dem mindestens einen Referenzverlauf R1, R2, ..., Rm ist. In Fig. 6 ist dargestellt, dass die Auswerteeinrichtung 8, die Prüfeinrichtung 9 und die Selektionseinrichtung 10 als gemeinsame Einrichtung ausgebildet sind, wobei diese gemeinsame Einrichtung z.B. als Recheneinrichtung ausgebildet ist oder eine solche umfassen kann.

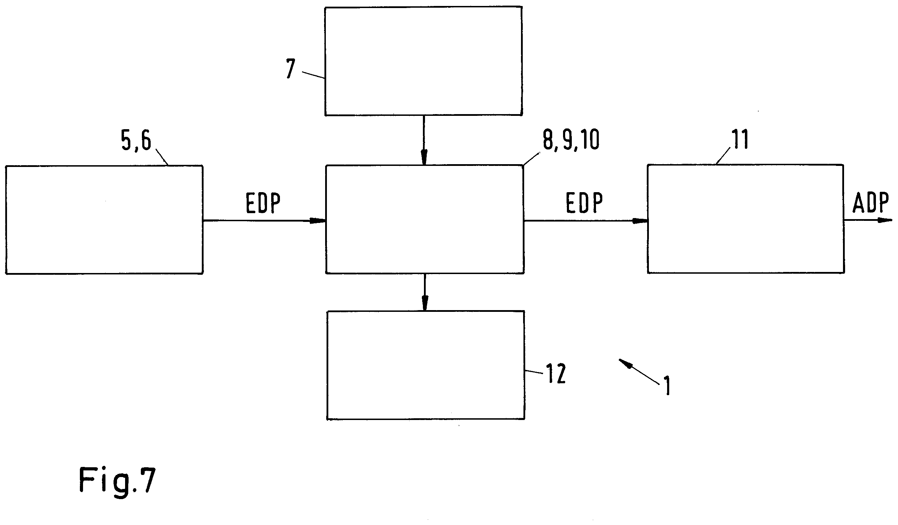

Fig. 7 zeigt ein weiteres schematisches Blockschaltbild eines erfindungsgemäßen Systems 1 zur Verarbeitung von Eingangsdatenpunkten EDP durch ein maschinell erlerntes Prädiktionsmodell. Das System 1 umfasst ein System 4 zur Selektion von Eingangsdatenpunkten EDP. Zusätzlich umfasst das System 1 eine Verarbeitungseinrichtung 11 zur Verarbeitung des Eingangsdatenpunkt durch das Prädiktionsmodell zur Erzeugung eines Ausgangsdatenpunkts ADP. Diese Verarbeitungseinrichtung 11 kann einen Ausgangsdatenpunkt ADP erzeugen, wenn der Eingangsdatenpunkt EPD als zur Verarbeitung durch das Prädiktionsmodell geeignet klassifiziert wurde. Ebenfalls umfasst das System 1 eine Benutzerschnittstelle 12 zur Ausgabe einer Aufforderung zur Annotation eines als nicht zur Verarbeitung durch das Prädiktionsmodell geeignet klassifizierten Eingangsdatenpunkts EDP. Über die Benutzerschnittstelle 12 kann auch eine Eingabe der Annotation erfolgen. Die Benutzerschnittstelle 12 kann somit die in Fig. 4 dargestellte Eingabeeinrichtung 3 umfassen.

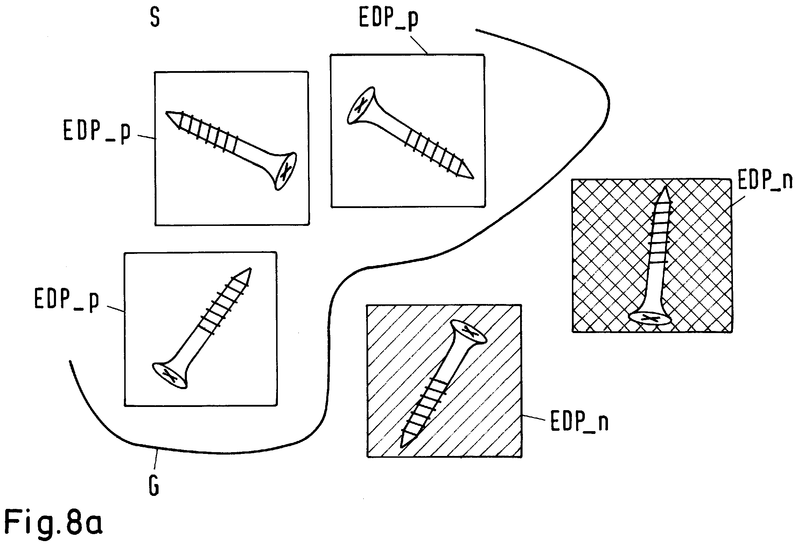

Fig. 8a zeigt eine schematische Darstellung von für die Verarbeitung selektierten Eingangsdatenpunkten EDP_p und von nicht für die Verarbeitung selektierten Eingangsdatenpunkten EDP_n, die jeweils ein Abbild einer Schraube repräsentieren. Auf Grundlage dieser Eingangsdatenpunkte EDP_p, EDP_n soll durch ein maschinell erlerntes Prädiktionsmodell eine Aussage über eine Qualität der Schraube bestimmt werden, wobei ein Ausgangsdatenpunkt ADP (siehe Fig. 4) dann die Qualität oder das Erfüllen eines vorbestimmten Qualitätskriteriums repräsentieren kann. Aufgrund des vorgeschlagenen Verfahrens kann davon ausgegangen werden, dass auf Basis der für die Verarbeitung selektierten Eingangsdatenpunkten EDP_p eine zuverlässige Aussage über die Qualität bestimmt werden kann während auf Basis der für die Verarbeitung selektierten Eingangsdatenpunkten EDP_n keine zuverlässige Aussage über die Qualität bestimmt werden kann. Z.B. können die Abbilder, die von den nicht für die Verarbeitung selektierten Eingangsdatenpunkten EDP_n repräsentiert sind, über- oder unterbelichtet sein. Schematisch dargestellt ist eine Grenze G zwischen den Mengen, die die für die Verarbeitung selektierten Eingangsdatenpunkten EDP_p und die nicht für die Verarbeitung selektierten Eingangsdatenpunkte EDP_n, umfassen.

Es ist ersichtlich, dass Bilder mit geringem Kontrast oder Hintergrundartefakten nicht für die Verarbeitung selektiert werden, diese können zur Verarbeitung an einen Experten weitergeleitet werden.

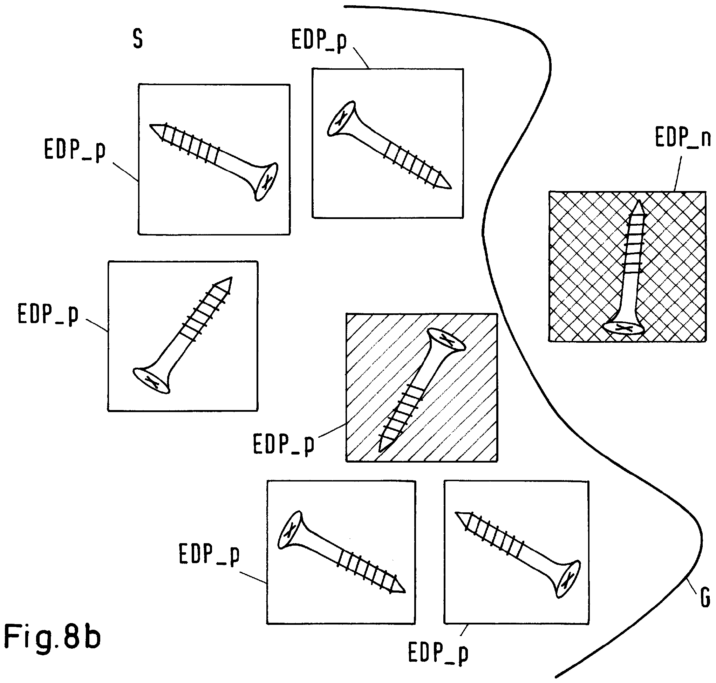

Fig. 8b zeigt eine schematische Darstellung von für die Verarbeitung selektierten Eingangsdatenpunkten EDP_p und von nicht für die Verarbeitung selektierten Eingangsdatenpunkten EDP_n, die jeweils ein Abbild einer Schraube repräsentieren. Die in Fig. 8b dargestellte Aufteilung kann sich beispielsweise ergeben, nachdem ein Basismodell BLM, durch welches vor einer Anpassung die in Fig. 8a dargestellte Selektion erfolgte, wie in den Ausführungen zu Fig. 4 erläutert angepasst wurde. Wiederum ist eine Grenze G zwischen den Mengen, die die für die Verarbeitung selektierten Eingangsdatenpunkten EDP_p und die nicht für die Verarbeitung selektierten Eingangsdatenpunkte EDP_n, umfassen, schematisch dargestellt. Im Unterschied zu der in Fig. 8a dargestellten Aufteilung ist erkennbar, dass nach der Anpassung auch überbelichtete Abbilder Eingangsdatenpunkte EDP_p bilden können, die für die Verarbeitung selektiert werden. So können im laufenden Betrieb weitere Abbilder mit geringem Kontrast gesammelt und z.B. durch einen Experten verarbeitet werden, wobei - wenn ausreichend solcher Abbilder gesammelt und weiterverarbeitet wurden - auch ähnliche Abbilder zuverlässig durch ein (angepasstes) MLM verarbeiten werden können.

### Bezugszeichenliste

- 1: System zur Verarbeitung von Eingangsdatenpunkten
- 2: externes System
- 3: Eingabeeinrichtung
- 4: System zur Selektion von Eingangsdatenpunkten
- 5: Erfassungseinrichtung
- 6: Empfangseinrichtung
- 7: Speichereinrichtung
- 8: Auswerteeinrichtung
- 9: Prüfeinrichtung
- 10: Selektionseinrichtung
- 11: Verarbeitungseinrichtung
- 12: Benutzerschnittstelle
- ES: Empfangsschritt
- BS: Bestimmungsschritt
- PS: Prüfschritt
- SS: Selektionsschritt
- TS: Trainingsschritte
- CS: Clusteringschritt
- AS: Auswahlschritt
- MML: mengenspezifisch erlerntes Modell
- ES2: Empfangsschritt
- VS: Verarbeitungsschritt
- AGS: Ausgabeschritt
- APS: Anpassungsschritt
- EDP: Eingangsdatenpunkt
- EDP_p: als zur Verarbeitung geeignet selektierter Eingangsdatenpunkt
- EDP_n: als nicht zur Verarbeitung geeignet selektierter Eingangsdatenpunkt
- ADP: Ausgangsdatenpunkt
- PQW: Prädiktionsqualitätswert
- BML: Basismodell
- R1, R2, Rm: Referenzmodell
- M1, M2, Mn: Menge ähnlicher Verläufe
- S1: erster Schritt
- S2: zweiter Schritt
- S3: dritter Schritt
- G: Grenze

## Patentansprüche

1. Verfahren zur Selektion von Eingangsdatenpunkten (EDP) zur Verarbeitung durch ein maschinell erlerntes Prädiktionsmodell umfassend die Schritte:
- Erfassen oder Empfangen eines Eingangsdatenpunkts (EDP),
- Bestimmen eines Verlaufs von mindestens zwei Prädiktionsqualitätswerten (PQW), wobei diese Prädiktionsqualitätswerte (PQW) jeweils mit einer trainingsschrittspezifischen Instanz eines maschinell erlernten Selektionsmodells bestimmt werden, welches durch maschinelles Lernen in mehreren Trainingsschritten (TS) erzeugt wurde,
- Prüfen, ob der Verlauf der mindestens zwei Prädiktionsqualitätswerte (PQW) zu mindestens einem Referenzverlauf (R1, R2, ..., Rm) ähnlich ist,
- Selektion des Eingangsdatenpunkts (EDP) für die Verarbeitung, wenn der Verlauf der mindestens zwei Prädiktionsqualitätswerte (PQW) ähnlich zu dem mindestens einen Referenzverlauf (R1, R2, ..., Rm) ist.

2. Verfahren nach Anspruch 1, **dadurch gekennzeichnet, dass** für mindestens zwei Trainings-Eingangsdatenpunkte während eines Trainings ein eingangsdatenpunktspezifischer Verlauf von mindestens zwei Prädiktionsqualitätswerten (PQW) bestimmt wird, wobei diese Prädiktionsqualitätswerte (PQW) jeweils mit einer trainingsschrittspezifischen Instanz des Selektionsmodells bestimmt werden, wobei die eingangsdatenpunktspezifischen Verläufe einer Menge (M1, M2, ..., Mn) ähnlicher Verläufe zugeordnet werden, wenn sie ein vorbestimmtes Ähnlichkeitskriterium erfüllen.

3. Verfahren nach Anspruch 2, **dadurch gekennzeichnet, dass** das vorbestimmte Ähnlichkeitskriterium erfüllt ist, wenn eine Abweichung zwischen den Verläufen kleiner als ein vorbestimmter Schwellwert ist.

4. Verfahren nach einem der Ansprüche 2 bis 3, **dadurch gekennzeichnet, dass** ein Referenzverlauf (R1, R2, ..., Rm) in Abhängigkeit der eingangsdatenpunktspezifischen Verläufe, insbesondere der Verläufe einer Menge (M1, M2, ..., Mn) ähnlicher Verläufe, bestimmt wird.

5. Verfahren nach einem der Ansprüche 2 bis 4, **dadurch gekennzeichnet, dass** ein eingangsdatenpunktspezifischer Verlauf oder ein mengenspezifischer Verlauf als erster Verlauf bestimmt wird, wobei der erste Verlauf als Referenzverlauf (R1, R2, ..., Rm) klassifiziert wird, wenn eine Fläche unter dem ersten Verlauf größer als ein vorbestimmter Schwellwert und/oder größer als eine Fläche unter mindestens einem weiteren Verlauf ist.

6. Verfahren nach Anspruch 3 oder nach einem auf diesen Anspruch 3 zurückbezogenen Anspruch, **dadurch gekennzeichnet, dass** der Verlauf der mindestens zwei Prädiktionsqualitätswerte (PQW) ähnlich zu dem mindestens einen Referenzverlauf (R1, R2, ..., Rm) ist, wenn eine Abweichung zwischen dem Verlauf der mindestens zwei Prädiktionsqualitätswerte (PQW) und dem Referenzverlauf (R1, R2, ..., Rm) kleiner als ein vorbestimmter Schwellwert ist, wobei die Abweichung in gleicher Weise bestimmt wird wie die Abweichung zwischen den eingangsdatenpunktspezifischen Verläufen.

7. Verfahren zur Verarbeitung von Eingangsdatenpunkten (EDP) durch ein maschinell erlerntes Prädiktionsmodell umfassend die Schritte:
- Erfassen oder Empfangen eines Eingangsdatenpunkts (EDP),
- Selektion des Eingangsdatenpunkts (EDP) für die Verarbeitung gemäß einem Verfahren nach einem der Ansprüche 1 bis 6,
- Verarbeitung des selektierten Eingangsdatenpunkts (EDP) durch das erlernte Prädiktionsmodell zur Erzeugung eines Ausgangsdatenpunkts (ADP).

8. Verfahren nach Anspruch 7, **dadurch gekennzeichnet, dass**, wenn der Referenzverlauf (R1, R2, ..., Rm) in Abhängigkeit der Verläufe einer Menge (M1, M2,..., Mn) ähnlicher Verläufe bestimmt wurde, das Prädiktionsmodell als mengenspezifisches maschinell erlerntes Modell bestimmt wird.

9. Verfahren nach Anspruch 7 oder 8, **dadurch gekennzeichnet, dass** im Fall, dass der Verlauf der mindestens zwei Prädiktionsqualitätswerte (PQW) nicht ähnlich zu einem Referenzverlauf (R1, R2, ..., Rm) ist,
- ein Warnsignal erzeugt und/oder
- eine Information über die Unähnlichkeit erzeugt und einem erzeugten Ausgangsdatenpunkt (ADP) zugeordnet oder
- der Eingangsdatenpunkt (EDP) nicht durch das Prädiktionsmodell verarbeitet wird.

10. Verfahren nach einem der Ansprüche 7 bis 9, **dadurch gekennzeichnet, dass** für einen als nicht zur Verarbeitung klassifizierten Eingangsdatenpunkt (EDP) ein Ausgangsdatenpunkt (ADP) bestimmt wird, wobei das Prädiktionsmodell in Abhängigkeit dieser Datenpunkte (EDP, ADP) trainiert oder angepasst wird.

11. Verfahren nach einem der Ansprüche 7 bis 10, **dadurch gekennzeichnet, dass** in Abhängigkeit des Ausgangsdatenpunkts (ADP) ein externes System (2) gesteuert wird.

12. Verfahren nach einem der vorangegangenen Ansprüche, **dadurch gekennzeichnet, dass** der Eingangsdatenpunkt (EDP) mit einer Bilderfassungseinrichtung erfasst wird.

13. System (4) zur Selektion von Eingangsdatenpunkten zur Verarbeitung durch ein maschinell erlerntes Prädiktionsmodell umfassend zumindest:
- eine Erfassungseinrichtung (5) zur Erfassung eines Eingangsdatenpunkts (EDP) und/oder eine Empfangseinrichtung (6) zum Empfang eines Eingangsdatenpunkts (EDP),
- mindestens eine Speichereinrichtung (7) zur Speicherung von mindestens zwei trainingsschrittspezifischen Instanzen eines maschinell erlernten Selektionsmodells (SML),
- eine Auswerteeinrichtung (8) zur Bestimmung eines Verlaufs von mindestens zwei Prädiktionsqualitätswerten (PQW), wobei diese Prädiktionsqualitätswerte (PQW) jeweils mit einer trainingsschrittspezifischen Instanz des Selektionsmodells (SML) bestimmt werden,
- eine Prüfeinrichtung (9) zur Prüfung, ob der Verlauf der mindestens zwei Prädiktionsqualitätswerte (PQW) zu mindestens einem Referenzverlauf (R1, R2,..., Rm) ähnlich ist, und
- eine Selektionseinrichtung (10) zur Selektion des Eingangsdatenpunkts (EDP) für die Verarbeitung, wenn der Verlauf der mindestens zwei Prädiktionsqualitätswerte (PQW) ähnlich zu dem mindestens einen Referenzverlauf (R1, R2,..., Rn) ist.

14. System (1) zur Verarbeitung von Eingangsdatenpunkten (EDP) durch ein maschinell erlerntes Prädiktionsmodell, welches durch maschinelles Lernen in mehreren Trainingsschritten (TS) erzeugt wurde, umfassend ein System gemäß Anspruch 13 und
- eine Verarbeitungseinrichtung (11) zur Verarbeitung des Eingangsdatenpunkts (EDP) durch das Prädiktionsmodell zur Erzeugung eines Ausgangsdatenpunkts (ADP).

15. Computerprogrammprodukt mit einem Computerprogramm, wobei das Computerprogramm Softwaremittel zur Ausführung ausgewählter oder aller Schritte des Verfahrens nach einem der Ansprüche 1 bis 12 umfasst, wenn das Computerprogramm von oder in einem Computer oder einem Automatisierungssystem ausgeführt wird.
